(19) Europäisches Patentamt / European Patent Office / Office européen des brevets

(11) **EP 2 908 522 B1**

(12) **EUROPEAN PATENT SPECIFICATION**

(45) Date of publication and mention
of the grant of the patent:
**05.10.2016 Bulletin 2016/40**

(21) Application number: **13875919.6**

(22) Date of filing: **06.08.2013**

(51) Int Cl.:
**H04N 17/00** (2006.01)

(86) International application number:
**PCT/CN2013/080892**

(87) International publication number:
**WO 2014/127608 (28.08.2014 Gazette 2014/35)**

(54) **METHOD AND DEVICE FOR EVALUATING VIDEO FREEZE DISTORTION DEGREE**

VERFAHREN UND VORRICHTUNG ZUR BEWERTUNG DES VERZERRUNGSGRADES BEIM
EINFRIEREN EINES VIDEOBILDES

PROCÉDÉ ET DISPOSITIF D'ÉVALUATION DU DEGRÉ DE DISTORSION STATIQUE D'UNE VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.02.2013 CN 201310054674**

(43) Date of publication of application:
**19.08.2015 Bulletin 2015/34**

(73) Proprietor: **Huawei Technologies Co., Ltd.
Longgang District
Shenzhen, Guangdong 518129 (CN)**

(72) Inventors:
• **GAO, Shan
Shenzhen
Guangdong 518129 (CN)**

• **SUN, Lina
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(56) References cited:
**EP-A1- 1 883 068    EP-A1- 2 400 758
AU-A1- 2003 204 340    CN-A- 101 621 696
CN-A- 102 740 108    JP-A- 2007 135 040
US-A1- 2007 237 227**

EP 2 908 522 B1

## Description

### TECHNICAL FIELD

The present invention relates to the field of communications technologies, and more specifically, to a method and an apparatus for assessing a video freeze distortion degree.

### BACKGROUND

In a background of rapid development of network videos, because data volume of video services is large, a real-time requirement of the video services is high, and users are highly sensitive to the video services, an operator needs to monitor quality of a transmitted video service and adopt a corresponding measure in time to perform adjustment, so as to ensure an experience requirement of a user on the video services. Quality of a network video is affected by many complex factors, and an assessment on network video distortion quality is an important technology essential for a network video application.

However, in an existing method for assessing a no-reference objective video distortion degree, factors considered are not comprehensive and cannot accurately reflect subjective feelings of human eyes, which has a certain limitation; and therefore, accuracy of distortion degree prediction is low.

US 2007/0237227 A1 discloses a method comprising generating a temporal quality metric for a video sequence based on a number of dropped video frames in the video sequence and based on temporal quality fluctuation within the video sequence.

EP 2 400 758 A1 discloses a method for assessing the quality of an encoded video stream comprises the steps of performing measurements of said video stream for deriving there from a mean compression ratio parameter of the video stream, a time discontinuity impairment indicator, a degraded frame impairment indicator related to packet losses during transmission of said encoded video, and a video activity parameter, said mean compression ratio parameter, said time discontinuity impairment indicator, said degraded frame impairment indicator and said video activity parameter being further used to during calculation of a single quality metric of which the resulting value is representative for the quality of said encoded video stream.

### SUMMARY

Embodiments of the present invention provide a method and an apparatus for assessing a video freeze distortion degree, which can improve accuracy of distortion degree prediction.

According to a first aspect, a method for assessing a video freeze distortion degree is provided, including: acquiring a frame rate and a freeze feature parameter of a freeze event that are of a video stream, where the freeze feature parameter of the freeze event is correlated with duration of the freeze event of the video stream, and the freeze event is used to represent a pause of the video stream, wherein the duration of the freeze event is represented by using the quantity of freeze frames; the freeze feature parameter of the freeze event is correlated with duration of the freeze event of the video stream includes: that the freeze feature parameter of the freeze event is represented by using a proportional relationship between the quantity of freeze frames and a total quantity of video frames of the video stream; or that the freeze feature parameter of the freeze event is represented by using a proportional relationship between the quantity of freeze frames and a quantity of continuous playings of the video stream; and acquiring a freeze event distortion value of the video stream according to the frame rate and the freeze feature parameter of the freeze event that are of the video stream, where the freeze event distortion value is used to represent a distortion degree of the video stream; wherein the acquiring a freeze event distortion value of the video stream according to the frame rate and the freeze feature parameter of the freeze event that are of the video stream includes:

acquiring the freeze event distortion value of the video stream according to

$$freezing\_artifact\_value = \frac{a_1}{a_2 + \dfrac{a_3}{fps \cdot f\_freezing\_length^{a_4}}}$$

a formula , where: *fps* is the frame rate of the video stream; *f_freezing_length* is the freeze feature parameter of the freeze event of the video stream; *freezing_artifact_value* is the freeze event distortion value; and $a_1$, $a_2$, $a_3$, and $a_4$ are positive constants.

According to a second aspect, a method for assessing a video freeze distortion degree is provided, including: acquiring a frame rate and a freeze feature parameter of a freeze event that are of a video stream, wherein the freeze feature parameter of the freeze event is correlated with duration of the freeze event of the video stream, and the freeze event is used to represent a pause of the video stream, wherein the duration of the freeze event is represented by using a quantity of freeze frames; the freeze feature parameter of the freeze event is correlated with duration of the freeze event of the video stream comprises: that the freeze feature parameter of the freeze event is represented by using a proportional relationship between the quantity of freeze frames and a total quantity of video frames of the video stream, or that the freeze feature parameter of the freeze event is represented by using a proportional relationship between the quantity of freeze frames and a quantity of continuous playing of the video stream; and acquiring a freeze event distortion value of the video stream according to the frame rate and the freeze feature parameter of the freeze event that are of the video stream, wherein the freeze event distortion value is used to represent a distortion degree of the video stream; wherein the method further comprises: acquiring a video motion feature parameter that is of the video stream and is correlated with at least one of a motion change degree and motion consistency that are of the video stream; and the acquiring a freeze event distortion value of the video stream according to the frame rate and the freeze feature parameter of the freeze event that are of the video stream comprises: acquiring the freeze event distortion value of the video stream according to the video motion feature parameter, the frame rate, and the freeze feature parameter of the freeze event that are of the video stream; wherein the acquiring the freeze event distortion value of the video stream according to the video motion feature parameter, the frame rate, and the freeze feature parameter of the freeze event that are of the video stream comprises: determining the freeze event distortion value of the video stream according to a formula

$$freezing\_artifact\_value = \cfrac{a_9}{a_{10} + \cfrac{a_{11}}{fps \cdot f\_freezing\_length^{a_{12}} \cdot MV^{a_{13}}}}$$

, wherein: *fps* is the frame rate of the video stream; *f_freezing_length* is the freeze feature parameter of the freeze event of the video stream; *MV* is the video motion feature parameter of the video stream; and $a_9$, $a_{10}$, $a_{11}$, $a_{12}$, and $a_{13}$ are positive constants

With reference to the second aspect, in a first possible implementation manner of the second aspect, the acquiring a video motion feature parameter of the video stream includes: determining the video motion feature parameter of the video stream according to a motion vector of a coded frame that is before the freeze event of the video stream occurs; or determining the video motion feature parameter of the video stream according to a motion vector of a coded frame that is after the freeze event of the video stream ends; or determining the video motion feature parameter of the video stream according to a motion vector of a coded frame that is before the freeze event of the video stream occurs and a motion vector of a coded frame that is after the freeze event of the video stream ends; or determining the video motion feature parameter of the video stream according to motion vectors of all coded frames of the video stream.

With reference to the first possible implementation manner of the second aspect, in a second possible implementation manner of the second aspect, the determining the video motion feature parameter of the video stream according to a motion vector of a coded frame that is before the freeze event of the video stream occurs includes: determining the video motion feature parameter of the video stream according to a motion vector of the last decoded or displayed coded frame that is before the freeze event of the video stream occurs.

With reference to the second aspect, the first possible implementation manner of the second aspect, or the second possible implementation manner of the second aspect, in a third possible implementation manner of the second aspect, a direction of a correlation between the video motion feature parameter and the motion change degree of the video stream is consistent with a direction of a correlation between the video motion feature parameter and the freeze event distortion value, and a direction of a correlation between the video motion feature parameter and the motion consistency of the video stream is consistent with the direction of the correlation between the video motion feature parameter and the freeze event distortion value.

With reference to the first aspect, the second aspect, the first possible implementation manner of the second aspect, the second possible implementation manner of the second aspect, or the third possible implementation manner of the second aspect, in a first possible implementation manner of the first aspect or in a fourth possible implementation manner of the second aspect, the frame rate is in a positive correlation with the freeze event distortion value, and a direction of a correlation between the freeze feature parameter of the freeze event and the duration of the freeze event is consistent with a direction of a correlation between the freeze feature parameter of the freeze event and the freeze event distortion value.

With reference to the first aspect, the second aspect, the first possible implementation manner of the first aspect, the first possible implementation manner of the second aspect, the second possible implementation manner of the second aspect, the third possible implementation manner of the second aspect, or the fourth possible implementation manner of the second aspect, in a second possible implementation manner of the first aspect or in a fifth possible implementation manner of the second aspect,, when the freeze feature parameter of the freeze event is represented by using the proportional relationship between the quantity of freeze frames and the total quantity of video frames of the video stream, the acquiring a frame rate and a freeze feature parameter of a freeze event that are of a video stream includes: acquiring the frame rate of the video stream; and determining the freeze feature parameter *f_freezing_length* of the freeze event of the video stream according to a formula

$$f\_freezing\_length = \frac{i\_total\_num\_freezing\_frames}{i\_total\_num\_frames},$$

where:

*i_total_num_frames* indicates the total quantity of video frames of the video stream; *i_total_num_freezing_frames* indicates a quantity of all freeze frames corresponding to the freeze event of the video stream; and *f_freezing_length* indicates the freeze feature parameter of the freeze event.

According to a third aspect, an apparatus for assessing a video freeze distortion degree is provided, including: a first acquiring unit, configured to acquire a frame rate and a freeze feature parameter of a freeze event that are of a video stream, where the freeze feature parameter of the freeze event is correlated with duration of the freeze event of the video stream, the duration of the freeze event is represented by using a quantity of freeze frames; and the freeze event is used to represent a pause of the video stream; the freeze feature parameter of the freeze event is correlated with duration of the freeze event of the video stream includes: that the freeze feature parameter of the freeze event is represented by using a proportional relationship between the quantity of freeze frames and a total quantity of video frames of the video stream; or that the freeze feature parameter of the freeze event is represented by using a proportional relationship between the quantity of freeze frames and a quantity of continuous playings of the video stream; and a second acquiring unit, configured to acquire a freeze event distortion value of the video stream according to the frame rate and the freeze feature parameter of the freeze event that are of the video stream, where the freeze event distortion value is used to represent a distortion degree of the video stream; wherein the second acquiring unit is specifically configured to:

acquire the freeze event distortion value of the video stream according to a

$$freezing\_artifact\_value = \frac{a_1}{a_2 + \dfrac{a_3}{fps \cdot f\_freezing\_length^{a_4}}}$$

formula , where: *fps* is the frame rate of the video stream; *f_freezing_length* is the freeze feature parameter of the freeze event of the video stream; *freezing_artifact_value* is the freeze event distortion value; and $a_1$, $a_2$, $a_3$, and $a_4$ are positive constants.

With reference to the third aspect, in a first possible implementation manner of the third aspect, when the freeze feature parameter of the freeze event is represented by using the proportional relationship between the quantity of freeze frames and the total quantity of video frames of the video stream, the first acquiring unit is specifically configured to: acquire the frame rate of the video stream; and determine the freeze feature parameter *f_freezing_length* of the freeze event of the video stream according to a formula

$$f\_freezing\_length = \frac{i\_total\_num\_freezing\_frames}{i\_total\_num\_frames},$$

where:

*i_total_num_frames* indicates the total quantity of video frames of the video stream; *i_total_num_freezing_frames* indicates a quantity of all freeze frames corresponding to the freeze event of the video stream; and *f_freezing_length* indicates the freeze feature parameter of the freeze event.

Therefore, in the embodiments of the present invention, by acquiring a frame rate of a video stream and a freeze feature parameter correlated with duration of a freeze event of the video stream, and acquiring a freeze event distortion value of the video stream according to the frame rate of the video stream and the freeze feature parameter, when an assessment on a freeze event distortion degree is performed, factors considered are more comprehensive and more in line with subjective feelings of people, so that accuracy of distortion degree prediction is improved.

BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic flowchart of a method for assessing a video freeze distortion degree according to an embodiment of the present invention;
FIG. 2 is a schematic block diagram of an apparatus for assessing a video freeze distortion degree according to an embodiment of the present invention;
FIG. 3 is a schematic block diagram of another apparatus for assessing a video freeze distortion degree according to an embodiment of the present invention;
FIG. 4 is an application scenario diagram of an apparatus for assessing a video freeze distortion degree according to an embodiment of the present invention; and
FIG. 5 is an application scenario diagram of an apparatus for assessing a video freeze distortion degree according to another embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are a part rather than all of the embodiments of the present invention.
It should be understood that, the technical solutions of the embodiments of the present invention may be applied to various communications systems, such as: a Global System for Mobile Communications (Global System of Mobile communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, an LTE time division duplex (Time Division Duplex, "TDD" for short), a Universal Mobile Telecommunications System (Universal Mobile Telecommunication System, "UMTS" for short), or the like.
A method for assessing a video freeze distortion degree in an embodiment of the present invention may be used to assess video distortion quality.

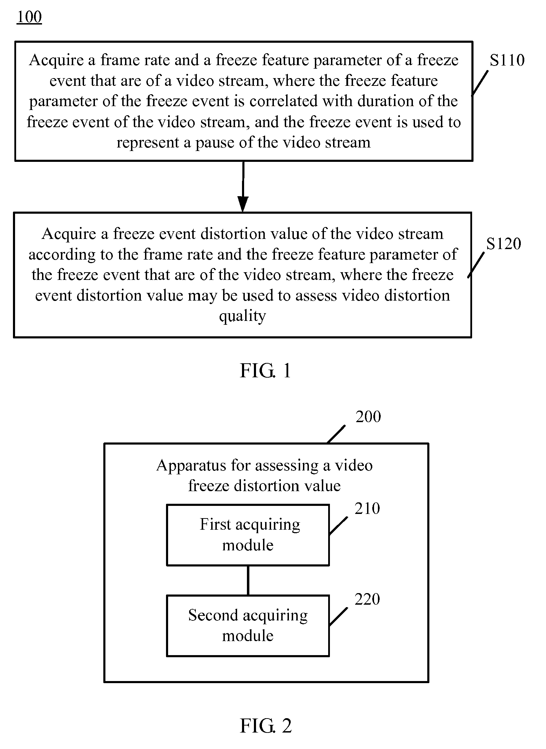

FIG. 1 is a schematic flowchart of a method 100 for assessing a video freeze distortion degree according to an embodiment of the present invention. As shown in FIG. 1, the method 100 includes:

S110. Acquire a frame rate and a freeze feature parameter of a freeze event that are of a video stream, where the freeze feature parameter of the freeze event is correlated with duration of the freeze event of the video stream, and the freeze event is used to represent a pause of the video stream.

It should be noted that the freeze feature parameter in this embodiment of the present invention is correlated with the duration of the freeze event of the video stream, and their relativity appears as that: for obtaining of the freeze feature parameter, refer to duration of freeze time or an equivalent variant that can reflect the duration, which is not specifically limited herein. For example, the duration of the freeze event may be represented by using time, or may be represented by using a quantity of freeze frames.
In this embodiment of the present invention, when the duration of the freeze event is represented by using the quantity of freeze frames, that the freeze feature parameter of the freeze event is correlated with duration of the freeze event of the video stream includes: that the freeze feature parameter of the freeze event is represented by using a proportional relationship between the quantity of freeze frames and a total quantity of video frames of the video stream;

or that the freeze feature parameter of the freeze event is represented by using a proportional relationship between the quantity of freeze frames and a quantity of continuous playings of the video stream.

Specifically, the freeze feature parameter may be the duration of the freeze event, may be a ratio of the duration of the freeze event to duration of the continuous playings of the video stream, may be a ratio of the duration of the freeze event to (the duration of the continuous playings of the video stream plus the duration of the freeze event), may be a quantity of freeze frames corresponding to one or more freeze events, may be a ratio of a quantity of freeze frames corresponding to one or more freeze events to a quantity of continuously played video frames of the video stream, or may be a ratio of a quantity of freeze frames corresponding to one or more freeze events to the total quantity of video frames of the video stream. The total quantity of video frames of the video stream refers to a sum of the quantity of continuously played video frames of the video stream and the quantity of freeze frames, that is, a quantity of video frames that should be played in a case in which the video stream is normally played; or the total quantity of video frames of the video stream is a sum of all played video frames of the video stream.

S120. Acquire a freeze event distortion value of the video stream according to the frame rate and the freeze feature parameter of the freeze event that are of the video stream, where the freeze event distortion value may be used to assess video distortion quality.

In this embodiment of the present invention, the frame rate of the video stream is in a positive correlation with the freeze event distortion value, and a direction of a correlation between the freeze feature parameter and the duration of the freeze event is consistent with a direction of a correlation between the freeze feature parameter and the freeze event distortion value.

In this embodiment of the present invention, the frame rate of the video stream may be acquired from a code stream, may be acquired from a transmission packet header of the video stream, or may be acquired from auxiliary information externally transmitted.

In this embodiment of the present invention, besides acquiring of the frame rate and the freeze feature parameter that are of the video stream, a video motion feature parameter that is of the video stream and is correlated with at least one of a motion change degree and motion consistency that are of the video stream may further be acquired; and the freeze event distortion value of the video stream may be acquired according to the video motion feature parameter, the frame rate, and the freeze feature parameter that are of the video stream.

In this embodiment of the present invention, a direction of a correlation between the video motion feature parameter and the motion change degree of the video stream is consistent with a direction of a correlation between the video motion feature parameter and the freeze event distortion value, and a direction of a correlation between the video motion feature parameter and the motion consistency of the video stream is consistent with the direction of the correlation between the video motion feature parameter and the freeze event distortion value.

The video stream in this embodiment of the present invention refers to a video stream on which a distortion degree assessment is performed, and may be a part of a complete video stream or a complete video stream. Certainly, a distortion assessment may also be jointly performed on multiple complete video streams. For example, for two complete video streams A and B, the video stream A has total duration of 10 min and is divided into five clips with each clip of 2 min, and the video stream B has total duration of 5 min and is divided into five clips with each clip of 1 min. Then, a distortion degree assessment may be performed only on one or more clips in the video stream A, or a distortion degree assessment may be performed only on one or more clips in the video stream B, or a distortion assessment may be jointly performed on one or more clips in the video stream A and one or more clips in the video stream B.

The freeze event in this embodiment of the present invention refers to that a video pauses for a period of time, and duration during which the video pauses may be referred to as the duration of the freeze event. In a process in which the video pauses, the last frame of image before the freeze event occurs may be displayed, or another image may be displayed, for example, an image of a blank screen but with a displayed pause symbol or a comprehensive image in which the last displayed frame of image is combined with a displayed pause symbol may be displayed.

The freeze event in this embodiment of the present invention may be caused by a network delay, or may be caused by a network packet loss.

When the freeze event is caused by a network delay, because there is no packet loss, the freeze event may be a freeze event with a freeze and without frame skipping. During the freeze event, the last correctly received or decoded or displayed video frame before the freeze event occurs may be displayed, and when the freeze event ends, a video frame that should have been played during a pause of the video stream may continue to be played. Certainly, when the freeze event ends, the video frame that should have been played during the pause may also be discarded, and only a video frame after the video frame that should have been played during the pause continues to be played. In this case, the video frame that should have been played during the freeze event but is delayed to be played after the freeze event ends or the foregoing discarded video frame may be referred to as a freeze frame.

When the freeze event is caused by a network packet loss, because of a packet loss, a whole-frame loss and/or a decoding error and/or error propagation occurs, thereby causing an occurrence of a freeze event with a freeze and frame skipping. In one freeze event with a freeze and frame skipping, the video pauses once. In this case, one or more video frames of the video stream are discarded, and the last correctly received or decoded or displayed video frame before the freeze event occurs is displayed. The discarded one or more video frames may be referred to as freeze frames. It should be understood that in this embodiment of the present invention, if at least two events of a whole-frame loss, a decoding error, and error propagation simultaneously occur in a freeze event, freeze frames of the freeze event include all video frames discarded due to the at least two events of the whole-frame loss, the decoding error, and the error propagation.

In this embodiment of the present invention, after a freeze event occurs, if a video frame appears, where the video frame itself has no packet loss, and during decoding, is not affected by error propagation caused by a previous packet loss, or if a video frame appears, where the video frame itself has no packet loss, and during decoding, a reference frame of the frame is not affected by a packet loss and/or error propagation, the freeze event may be made to end.

In this embodiment of the present invention, the duration of the freeze event may be represented by using time, or may be represented by using a quantity of freeze frames.

In this embodiment of the present invention, that the frame rate of the video stream is in a positive correlation with the freeze event distortion value means that: a larger frame rate of the video stream indicates a larger freeze event distortion value, and a smaller frame rate of the video stream indicates a smaller freeze event distortion value.

In this embodiment of the present invention, that a direction of a correlation between the freeze feature parameter and the duration of the freeze event is consistent with a direction of a correlation between the freeze feature parameter and the freeze event distortion value means that: longer duration of the freeze event indicates a larger freeze event distortion value, and shorter duration of the freeze event indicates a smaller freeze event distortion value. That is, when the direction of the correlation between the freeze feature parameter and the duration of the freeze event is a positive correlation (larger duration of the freeze event indicates a larger freeze feature parameter, and smaller duration of the freeze event indicates a smaller freeze feature parameter), the direction of the correlation between the freeze feature parameter and the freeze event distortion value is also a positive correlation (a larger freeze feature parameter indicates a larger freeze event distortion value, and a smaller freeze feature parameter indicates a smaller freeze event distortion value). When the direction of the correlation between the freeze feature parameter and the duration of the freeze event is a negative correlation (larger duration of the freeze event indicates a smaller freeze feature parameter, and smaller duration of the freeze event indicates a larger freeze feature parameter), the direction of the correlation between the freeze feature parameter and the freeze event distortion value is also a negative correlation (a larger freeze feature parameter indicates a smaller freeze event distortion value, and a smaller freeze feature parameter indicates a larger freeze event distortion value).

In this embodiment of the present invention, a video motion refers to a temporal change of video content, which may be caused by a camera motion or caused by a change of the video content, may be a partial change, or may be a global change, for example, a translation motion (translation), a zooming motion (zooming), a pan (pan) motion, a tilt (tilt) motion, or a motion of an object. The video motion feature parameter represents a motion change degree (that is, a degree of a temporal change of the video content (for example, fast, slow, large, or small)) of at least one motion and/or motion consistency (that is, a temporal consistency change of the video content (for example, a regular motion or an irregular motion)) of at least one motion. A more regular motion indicates a more consistent motion, for example, a translation motion (translation), a zooming motion (zooming), a pan (pan) motion, or a global motion; and conversely, a more irregular motion indicates a more inconsistent motion.

In this embodiment of the present invention, that a direction of a correlation between the video motion feature parameter and the motion change degree of the video stream is consistent with a direction of a correlation between the video motion feature parameter and the freeze event distortion value means that: a higher motion change degree of the video stream indicates a larger freeze event distortion value. That is, when the direction of the correlation between the video motion feature parameter and the motion change degree of the video stream is a positive correlation (a higher motion change degree indicates a larger video motion feature parameter, and a lower motion change degree indicates a smaller video motion feature parameter), the direction of the correlation between the video motion feature parameter and the freeze event distortion value is also a positive correlation (a larger video motion feature parameter indicates a larger freeze event distortion value, and a smaller video motion feature parameter indicates a smaller freeze event distortion value). When the direction of the correlation between the video motion feature parameter and the motion change degree of the video stream is a negative correlation (a higher motion change degree indicates a smaller video motion feature parameter, and a lower motion change degree indicates a larger video motion feature parameter), the direction of the correlation between the video motion feature parameter and the freeze event distortion value is also a negative correlation (a larger video motion feature parameter indicates a smaller freeze event distortion value, and a smaller video motion feature parameter indicates a larger freeze event distortion value).

In this embodiment of the present invention, that a direction of a correlation between the video motion feature parameter and the motion consistency of the video stream is consistent with the direction of the correlation between the video motion feature parameter and the freeze event distortion value means that: a more consistent motion of the video stream indicates a larger freeze event distortion value. That is, when the direction of the correlation between the video motion feature parameter and the motion consistency of the video stream is a positive correlation (a more consistent motion indicates a larger video motion feature parameter, and a more inconsistent motion indicates a smaller video motion feature parameter), the direction of the correlation between the video motion feature parameter and the freeze event distortion value is also a positive correlation (a larger video motion feature parameter indicates a larger freeze event distortion value, and a smaller video motion feature parameter indicates a smaller freeze event distortion value). When the direction of the correlation between the video motion feature parameter and the motion consistency of the video stream is a negative correlation (a more consistent motion indicates a smaller video motion feature parameter, and a more inconsistent motion indicates a larger video motion feature parameter), the direction of the correlation between the video motion feature parameter and the freeze event distortion value is also a negative correlation (a larger video motion feature parameter indicates a smaller freeze event distortion value, and a smaller video motion feature parameter indicates a larger freeze event distortion value).

In this embodiment of the present invention, the motion change degree and the motion consistency that are of the video both may be acquired by using a motion vector of an inter-frame coded frame, and the motion vector is adjusted to an interval, for example, an interval [-128.0, 128.0]. Optionally, the motion vector that is adjusted to an interval may further be multiplied by the frame rate. The motion change degree is acquired by using the adjusted motion vector.

To understand the present invention more clearly, the following describes this embodiment of the present invention in detail, and an example in which the foregoing directions of the correlations are positive correlations is used for description, but the present invention is not limited thereto.

The following describes in detail how to acquire the video motion feature parameter of the video stream.

In this embodiment of the present invention, the video motion feature parameter of the video stream may be determined according to a motion vector (for example, an average of motion vectors of all displayed or decoded inter-frame coded frames of the video stream) of an inter-frame coded frame of the video stream or a discrete cosine transform (Discrete Cosine Transform, DCT for short) coefficient (for example, an average of DCT coefficients of all displayed or decoded coded frames (inter-frame coded frames and/or intra-frame coded frames) of the video stream) of a coded frame of the video stream.

In this embodiment of the present invention, the video motion feature parameter of the video stream may be determined according to a motion vector of an inter-frame coded frame that is before the freeze event of the video stream occurs; the video motion feature parameter of the video stream may be determined according to a motion vector of an inter-frame coded frame that is after the freeze event of the video stream ends; the video motion feature parameter of the video stream may be determined according to a motion vector of an inter-frame coded frame that is before the freeze event of the video stream occurs and a motion vector of an inter-frame coded frame that is after the freeze event of the video stream ends; the video motion feature parameter of the video stream may be determined according to a discrete cosine transform DCT coefficient of a coded frame that is before the freeze event of the video stream occurs; the video motion feature parameter of the video stream may be determined according to a DCT coefficient of a coded frame that is after the freeze event of the video stream ends; or the video motion feature parameter of the video stream may be determined according to a discrete cosine transform DCT coefficient of a coded frame that is before the freeze event of the video stream occurs and a DCT coefficient of a coded frame that is after the freeze event of the video stream ends.

In this embodiment of the present invention, the video motion feature parameter of the video stream may be specifically determined according to a motion vector of the last decoded or displayed inter-frame coded frame that is before the freeze event of the video stream occurs.

The following describes by using an example in which the video motion feature parameter correlated with the motion change degree of the video stream is determined according to formulas (1), (2), (3), and (4).

For example, the video motion feature parameter *MV* of the video stream may be acquired according to the formula (1):

$$MV = \sum_{i=1}^{n} d\_mv[i]^{d\_MVInfluence} \tag{1}$$

*d_MVInfluence* is a positive constant, for example, 0.05, or certainly may be another positive constant, where for video streams of different resolutions, different values may be used, or a same value may be used, and the values or the value may be specifically obtained by means of training or an empirical value; or *d_MVInfluence* may be a value correlated with an average of all motion vectors before the freeze event occurs; d_*mv*[*i*] indicates a value corresponding to a motion vector of the last decoded or displayed inter-frame coded frame before an *i* th freeze event of the video stream occurs; *i* = 1 indicates a first freeze event of the video stream; and n indicates a total quantity of freeze events of the video stream.

Alternatively, in this embodiment of the present invention, the video motion feature parameter *MV* of the video stream may be acquired according to the formula (2):

$$MV = \sum_{i=1}^{n} d\_MVInfluence \cdot d\_mv[i]$$

$$(2)$$

*d_MVInfluence* is a positive constant, for example, 2.5, or certainly may be another positive constant, where for video streams of different resolutions, different values may be used, and may be specifically obtained by means of training or an empirical value; or *d_MVInfluence* may be a value correlated with an average of all motion vectors before the freeze event occurs; *d_mv[i]* indicates a value corresponding to a motion vector of the last decoded or displayed inter-frame coded frame before an *i* th freeze event of the video stream occurs; *i* = 1 indicates a first freeze event of the video stream; and n indicates a total quantity of freeze events of the video stream.

In this embodiment of the present invention, *d_mv[i]* in the formula (1) or the formula (2) may be acquired by using the formula (3):

$$d\_mv[i] = \frac{\sum_{l=1}^{g} mvmedian[i]_l}{g}$$

$$(3)$$

The *mvmedian[i]$_l$* indicates a value corresponding to a motion vector of an *l* th macroblock in the last inter-frame coded frame before the *i* th freeze event of the video stream occurs; and *g* indicates a total quantity of macroblocks owned by the last decoded or displayed inter-frame coded frame before the *i* th freeze event of the video stream occurs.

In this embodiment of the present invention, *d_mv[i]* in the formula (1) or the formula (2) may also be acquired by using the formula (4):

$$d\_mv[i] = \sum_{l=1}^{g} mvmedian[i]_l$$

$$(4)$$

The *mvmedian[i]$_l$* indicates a value corresponding to a motion vector of an *l* th macroblock in the last decoded or displayed inter-frame coded frame before the *i* th freeze event of the video stream occurs; and *g* indicates a total quantity of macroblocks owned by the last decoded or displayed inter-frame coded frame before the *i* th freeze event of the video stream occurs.

*d_mv[i]* in the foregoing formulas (3) and (4) is obtained by separately summarizing values corresponding to motion vectors of all macroblocks of the frame or averaging values corresponding to motion vectors of all macroblocks of the frame. Certainly, *d_mv[i]* in this embodiment of the present invention may also be obtained in another manner. For example, the *d_mv[i]* is obtained by calculating a median of the values corresponding to the motion vectors of all the macroblocks of the frame.

In this embodiment of the present invention, after *d_mv[i]* is acquired according to the formulas (3) and (4), the *d_mv[i]* may be adjusted and then *MV* is calculated. For example, the *d_mv[i]* may be adjusted to an interval [C1, C2], where normalization processing may be performed on *d_mv[i]*, that is, *d_mv[i]* is adjusted to [0.0, 1.0]. For example, the *d_mv[i]* is adjusted by using $\min\left(C2, \dfrac{d\_mv[i] \cdot C4}{C3}\right)$ so as to adjust *d_mv[i]* to [0.0, 1.0], where C2=1.0, and C3 and C4 are constants, for example, C3=64.0 and C4=1/4. Certainly, the *d_mv[i]* may also be adjusted to another interval, which is not limited in this embodiment of the present invention.

In this embodiment of the present invention, the value *mvmedian[i]$_l$* corresponding to the motion vector of the *l*[th] macroblock may be determined according to all motion vectors of the *l*[th] macroblock, and specifically, may be performed by using the following two methods:

**Method 1**

1) Adjust $m_{vx,t,l}$ and $mv_{y,t,l}$ of the macroblock $l$ to an interval [b1, b2], where $mv_{x,t,l}$ is a motion vector of a $t$ th block of the macroblock $l$ in a horizontal direction, $mv_{y,t,l}$ is a motion vector of the $t$ th block of the macroblock $l$ in a vertical direction, $t$ = 1,2,3....$T$, and T is a total quantity of blocks owned by the macroblock $l$ ; and b1 and b2 are constants, for example, b1=-128.0 and b2=128.0, or certainly, b1 and b2 may be other constants, and may be specifically obtained by means of training or an empirical value.

2) Respectively calculate medians of the adjusted $mv_{x,t,l}$ and $mv_{x,t,l}$, and respectively use the medians as a motion vector value $mv_{x,l}$ of the macroblock in the horizontal direction and a motion vector value $mv_{y,l}$ of the macroblock in the vertical direction.

3) Acquire $mvmedian[i]_l$ by using a formula $mvmedian[i]_l = \sqrt{\left(mv_{x,l}\right)^2 + \left(mv_{y,l}\right)^2}$ or $mvmedian[i]_l = |mv_{x,l}| + |mv_{y,l}|$.

4) Adjust $mvmedian[i]_l$ to [b3, b4], where b3 and b4 are constants, and may be specifically obtained by means of training or an empirical value.

**Method 2**

1) Adjust $mv_{x,t,l}$ and $mv_{y,t,l}$ of the macroblock $l$ to an interval [b1, b2], where $mv_{x,t,l}$ is a motion vector of a $t$ th block of the macroblock $l$ in a horizontal direction, $mv_{x,t,l}$ is a motion vector of the $t$ th block of the macroblock $l$ in a vertical direction, $t$ =1,2, 3....$T$, and T is a total quantity of blocks owned by the macroblock $l$ ; and b1 and b2 are constants, for example, b1=-128.0 and b2=128.0, or certainly, b1 and b2 may be other constants, and may be specifically obtained by means of training or an empirical value.

2) Calculate values of all the motion vectors of the macroblock $l$ by using a formula

$$mv_{t,l} = \sqrt{\left(mv_{x,t,l}\right)^2 + \left(mv_{y,t,l}\right)^2} \text{ or } mv_{t,l} = |mv_{x,l}| + |mv_{y,l}|.$$

3) Calculate a median of $mv_{t,l}$ of the macroblock $l$, and use the median as a median $mvmedian[i]_l$ of a motion vector of the macroblock.

4) Adjust $mvmedian[i]_l$ to [b5, b6], where b5 and b6 are constants, and may be specifically obtained by means of training or an empirical value.

It should be understood that, the foregoing two methods are only specific implementation manners for acquiring a value corresponding to a motion vector of a macroblock. There may further be another implementation manner in this embodiment of the present invention. For example, for the method 1, adjustment in steps 1) and/or 4) is not performed; and for method 2, adjustment in steps 1) and/or 4) is not performed either. For another example, steps 2) and 3) in the method 1 and the method 2 are determined in another manner. For another example, for the method 1 and the method 2, after $mv_{x,t,l}$ and $mv_{y,t,l}$ are adjusted to the interval [b1, b2], the adjusted values may further be separately multiplied by the frame rate to serve as $mv_{x,t,l}$ and $mv_{y,t,l}$ to be used, which may be specifically determined according to an actual situation, and is not limited in this embodiment of the present invention. It should further be understood that in some standards, for example, in the HEVC standard, the macroblock in this embodiment of the present invention may also be referred to as a codec unit (coding unit).

In this embodiment of the present invention, though the foregoing makes description by using an example in which the video motion feature parameter of the video stream is determined by using the formula (1) or (2) and according to a motion vector of the last decoded or displayed inter-frame coded frame that is before each freeze event occurs, there may further be another implementation manner in the present invention. For example, the video motion feature parameter of the video stream is determined by using a motion vector of any (for example, a first) decoded or displayed inter-frame coded frame that is after each freeze event ends; or the video motion feature parameter of the video stream is jointly determined by using one or more motion vectors of any one or more (for example, a last) decoded or displayed inter-frame coded frames that are before each freeze event occurs and one or more motion vectors of any one or more (for example, a first) decoded or displayed inter-frame coded frames that are after each freeze event ends (for example, an average of a value corresponding to a motion vector of the last decoded or displayed inter-frame coded frame that is before each freeze event occurs and a value corresponding to a motion vector of a first decoded or displayed inter-frame coded frame that is after each freeze event ends is first obtained, and then the video motion feature parameter of the video stream is determined according to the average, where for a method for acquiring the value corresponding to the motion vector of the first decoded or displayed inter-frame coded frame that is after each freeze event ends, refer to a method for acquiring the value corresponding to the motion vector of the last decoded or displayed inter-frame coded frame that is before each freeze event occurs); or the video motion feature parameter of the video stream is determined by using a DCT coefficient of any (for example, the first) decoded or displayed coded frame that is before each freeze event occurs; or the video motion feature parameter of the video stream is determined by using a DCT coefficient of any (for example, a first) decoded or displayed coded frame that is after each freeze event ends; or the video motion feature parameter of the video stream is jointly determined by using a DCT coefficient of any (for example, a last) decoded or displayed coded frame that is before each freeze event occurs and a DCT coefficient of any (for example, a first) decoded or displayed coded frame that is after each freeze event ends; or the video motion feature parameter of the video stream is determined by using motion vectors of multiple decoded or displayed inter-frame coded frames that are before each freeze event occurs (for example, an average of values corresponding to the motion vectors of the multiple decoded or displayed inter-frame coded frames is obtained, and then the video motion feature parameter of the video stream is determined according to the average); or the video motion feature parameter of the video stream is determined by using motion vectors of multiple decoded or displayed inter-frame coded frames that are after each freeze event ends; or the video motion feature parameter of the video stream is determined by using DCT coefficients of multiple decoded or displayed coded frames that are before each freeze event occurs; or the video motion feature parameter of the video stream is determined by using DCT coefficients of multiple decoded or displayed coded frames that are after each freeze event ends.

The following describes by using an example in which the video motion feature parameter correlated with the motion consistency of the video stream is determined by using formulas (5), (6), (7), (8), (9), (10), and (11).

In this embodiment of the present invention, the video motion feature parameter $MV$ of the video stream may also be determined according to the formula (5):

$$MV = \frac{\sum_{i=1}^{n} \max\left(pan\_factor_i, zoom\_factor_i\right)}{n} \tag{5}$$

$i = 1$ indicates a first freeze event of the video stream; $n$ indicates a total quantity of freeze events of the video stream; $pan\_factor_i$ indicates a pan motion feature parameter or a translation motion feature parameter corresponding to an $i$ th freeze event of the video stream (in the case of a pan motion or a translation motion, $pan\_factor_i$ is relatively larger, which may be understood as that the motion is more consistent); $zoom\_factor_i$ indicates a zooming motion feature parameter corresponding to the $i$ th freeze event of the video stream (in the case of a zooming motion, $zoom\_factor_i$ is relatively larger, which may be understood as that the motion is more consistent).

In this embodiment of the present invention, the foregoing $pan\_factor_i$ and $zoom\_factor_i$ may be determined according to multiple methods; for example, the foregoing $pan\_factor_i$ and $zoom\_factor_i$ may be determined by using the following three methods:

**Method A**

1) Determine $pan\_factor_i$ by using the formula (6):

$$pan\_factor_i = \frac{\sqrt{\left(\sum_{m \in p} \frac{\sum_{t \subset m} mv_{x,t,m} \cdot Aera_{t,m}}{\sum_{t \subset m} Aera_{t,m}}\right)^2 + \left(\sum_{m \in p} \frac{\sum_{t \subset m} mv_{y,t,m} \cdot Aera_{t,m}}{\sum_{t \subset m} Aera_{t,m}}\right)^2}}{i\_nbr\_mbs} \tag{6}$$

$m$ indicates an $m$ th macroblock; $p$ indicates a $p$ th inter-frame coded frame (for example, a last decoded or displayed inter-frame coded frame before the $i$ th freeze event occurs or a first decoded or displayed inter-frame coded frame after the $i$ th freeze event ends); $t$ indicates a $t$ th block in the $m$ th macroblock in the $p$ th inter-frame coded frame; $Aera_{t,m}$ indicates an area of the $t$ th block, and in this case, $Aera_{t,m}$ is in a unit of pixel, for example, a block size of 8x8 is 64 pixels, and a block size of 16x16 is 256 pixels; $mv_{x,t,m}$ indicates a motion vector value of the $t$ th block in a horizontal direction, where $mv_{x,t,m}$ may be an original motion vector value of the $t$ th block in the horizontal direction, or may be an adjusted motion vector value (for example, a value belonging to an interval [-128.0, 128.0] with a maximum value of 128.0 and a minimum value of -128.0; for another example, a motion vector further multiplied by the frame rate after being adjusted to [-128.0, 128.0]); $mv_{x,t,m}$ indicates a motion vector value of the $t$ th block in a vertical direction, where $mv_{x,t,m}$ may be an original motion vector value of the $t$ th block in the vertical direction, or may be an adjusted motion vector value (for example, a value belonging to an interval [-128.0, 128.0] with a maximum value of 128.0 and a minimum value of -128.0; for another example, a motion vector further multiplied by the frame rate after being adjusted to [-128.0, 128.0]); and $i\_nbr\_mbs$ indicates a total quantity of macroblocks owned by the $p$ th inter-frame coded frame.

2) Determine $zoom\_factor_i$ by using the formula (7):

$$zoom\_factor_i =$$

$$\sqrt{\frac{\left|\sum_{m\in p_L}\frac{\sum_{t\subset m}mv_{x,t,m}\cdot Aera_{t,m}}{\sum_{t\subset m}Aera_{t,m}}-\sum_{m\in p_R}\frac{\sum_{t\subset m}mv_{x,t,m}\cdot Aera_{t,m}}{\sum_{t\subset m}Aera_{t,m}}\right|^2+\left|\sum_{m\in p_T}\frac{\sum_{t\subset m}mv_{y,t,m}\cdot Aera_{t,m}}{\sum_{t\subset m}Aera_{t,m}}-\sum_{m\in p_B}\frac{\sum_{t\subset m}mv_{y,t,m}\cdot Aera_{t,m}}{\sum_{t\subset m}Aera_{t,m}}\right|^2}{i\_nbr\_mbs}}$$

$$(7)$$

$m$ indicates an $m$ th macroblock; $p_L$ indicates a left half of a $p$ th inter-frame coded frame; $p_R$ indicates a right half of the $p$ th inter-frame coded frame; $p_T$ indicates an upper half of the $p$ th inter-frame coded frame; $p_B$ indicates a lower half of the $p$ th inter-frame coded frame; $t$ indicates a $t$ th block in the $m$ th macroblock in $p_L$ or $p_R$ or $p_T$ or $p_B$ in the $p$ th inter-frame coded frame; $Aera_{t,m}$ indicates an area of the $t$ th block and is in a unit of pixel, for example, a block size of 8x8 is 64 pixels, and a block size of 16x16 is 256 pixels; $mv_{x,t,m}$ indicates a motion vector value of the $t$ th block in a horizontal direction, where $mv_{x,t,m}$ may be an original motion vector value of the $t$ th block in the horizontal direction, or may be an adjusted motion vector value (for example, a value belonging to an interval [-128.0, 128.0] with a maximum value of 128.0 and a minimum value of -128.0; for another example, a motion vector further multiplied by the frame rate after being adjusted to [-128.0, 128.0]); $mv_{yt,m}$ indicates a motion vector value of the $t$ th block in a vertical direction, where $mv_{y,t,m}$ may be an original motion vector value of the $t$ th block in the vertical direction, or may be an adjusted motion vector value (for example, a value belonging to an interval [-128.0, 128.0] with a maximum value of 128.0 and a minimum value of -128.0; for another example, a motion vector further multiplied by the frame rate after being adjusted to [-128.0, 128.0]); and $i\_nbr\_mbs$ indicates a total quantity of macroblocks owned by the $p$ th inter-frame coded frame.

**Method B**

1) Determine $pan\_factor_i$ by using the formula (8):

$$pan\_factor_i = \frac{\sqrt{\left(\sum_{m\in p}\sum_{t\subset m}mv_{x,t,m}\cdot Aera_{t,m}\right)^2+\left(\sum_{m\in p}\sum_{t\subset m}mv_{y,t,m}\cdot Aera_{t,m}\right)^2}}{video\_width\cdot video\_height} \qquad (8)$$

2) Determine $zoom\_factor_i$ by using the formula (9):

$$zoom\_factor_i =$$

$$\frac{\sqrt{\left|\sum_{m\in p_L}\sum_{t\subset m}MV_{x,t,m}\cdot Aera_{t,m}-\sum_{m\in p_R}\sum_{t\subset m}mv_{x,t,m}\cdot Aera_{t,m}\right|^2+\left|\sum_{m\in p_T}\sum_{t\subset m}mv_{y,t,m}\cdot Aera_{t,m}-\sum_{m\in p_B}\sum_{t\subset m}mv_{y,t,m}\cdot Aera_{t,m}\right|^2}}{video\_width\cdot video\_height}$$

$$(9)$$

$video\_width\cdot video\_height$ in the formulas (8) and (9) indicates an area (in a unit of pixel) of a $p^{\text{th}}$ inter-frame coded frame; for meanings of other parameters, refer to the formulas (6) and (7). For brevity, details are not described herein again.

**Method C**

1) Determine $pan\_factor_i$ by using the formula (10):

$$pan\_factor_i = \sqrt{\left(\sum_{m\in p}\sum_{t\subset m}mv_{x,t,m}\right)^2+\left(\sum_{m\in p}\sum_{t\subset m}mv_{y,t,m}\right)^2}$$

$$(10)$$

2) Determine $zoom\_factor_i$ by using the formula (11):

$$zoom\_factor_i = \sqrt{\left|\sum_{m\in p_L}\sum_{t\subset m}mv_{x,t,m}-\sum_{m\in p_R}\sum_{t\subset m}mv_{x,t,m}\right|^2+\left|\sum_{m\in p_T}\sum_{t\subset m}mv_{y,t,m}-\sum_{m\in p_B}\sum_{t\subset m}mv_{y,t,m}\right|^2}$$

$$(11)$$

For meanings of parameters in the formulas (10) and (11), refer to the formulas (6) and (7). For brevity, details are not described herein again.

It should be understood that in this embodiment of the present invention, the video motion feature parameter of the video stream may also be acquired in another manner, which is not limited in this embodiment of the present invention. For example, the formula (5) may be converted to

$$MV = \frac{\sum_{i=1}^{n}\left(pan\_factor_i + zoom\_factor_i\right)}{n}$$

or

$$MV = \frac{\sum_{i=1}^{n}\dfrac{\left(pan\_factor_i + zoom\_factor_i\right)}{2}}{n}$$

The foregoing describes how to acquire the video motion feature parameter of the video stream, and the following describes how to acquire the freeze feature parameter of the video stream.

It should be noted that the freeze feature parameter in this embodiment of the present invention is correlated with the duration of the freeze event of the video stream, and their relativity appears as that: for obtaining of the freeze feature parameter, reference needs to be made to duration of freeze time or an equivalent variant that can reflect the duration, which is not specifically limited herein. For example, the duration of the freeze event may be represented by using time, or may be represented by using a quantity of freeze frames, or may be represented by using a proportional relationship between the quantity of freeze frames and a total quantity of video frames of the video stream. Specifically, the freeze feature parameter may be the duration of the freeze event, may be a ratio of the duration of the freeze event to duration of the continuous playings of the video stream, may be a ratio of the duration of the freeze event to (the duration of the continuous playings of the video stream plus the duration of the freeze event), may be a quantity of freeze frames corresponding to one or more freeze events, may be a ratio of the quantity of freeze frames corresponding to one or more freeze events to a quantity of continuously played video frames of the video stream, or may be a ratio of the quantity of freeze frames corresponding to one or more freeze events to the total quantity of video frames of the video stream. The total quantity of video frames of the video stream refers to a sum of the quantity of continuously played video frames of the video stream and the quantity of freeze frames, that is, a quantity of video frames that should be played in a case in which the video stream is normally played; or the total quantity of video frames of the video stream is a sum of all played video frames of the video stream.

In this embodiment of the present invention, when the freeze event is caused by a network delay, information (for example, a starting position of the freeze event, and the duration of the freeze event (which may be represented by using time)) about the freeze event may be acquired from a video pause device, or may be fed back by a receive end of the video stream. When the freeze event is caused by a network packet loss, a video error concealment method used by a video decoder at the receive end of the video stream may be used, so that a freeze event that is the same as a freeze event obtained by the video decoder may be obtained, and information (for example, the duration of the freeze event (which may be represented by using the quantity of freeze frames)) about the freeze event is obtained.

For example, the freeze feature parameter $f\_freezing\_length$ of the video stream may be acquired according to a formula (12):

$$f\_freezing\_length = \frac{i\_total\_num\_freezing\_frames}{i\_total\_num\_frames} \qquad (12)$$

$i\_total\_num\_frames$ indicates the total quantity of video frames of the video stream; and $i\_total\_num\_freezing\_frames$ indicates a total quantity of freeze frames corresponding to the freeze event of the video stream.

For example, after the video motion feature parameter, the frame rate, and the freeze feature parameter that are of the video stream are acquired, the freeze event distortion value of the video stream may be acquired.

For example, the freeze event distortion value $freezing\_artifact\_value$ of the video stream is acquired by using the following formula (13):

$$freezing\_artifact\_value = a_1 \cdot \left( \frac{\left( \frac{f\_freezing\_length}{a_2} \right)^{a_3} \cdot MV}{\frac{a_4}{fps} + \left( \frac{f\_freezing\_length}{a_2} \right)^{a_3} \cdot MV} \right) \qquad (13)$$

$fps$ is the frame rate of the video stream; $f\_freezing\_length$ is the freeze feature parameter of the video stream; $MV$ is the video motion feature parameter of the video stream; and $a_1$, $a_2$, $a_3$, and $a_4$ are positive constants, where specific values may be obtained by means of training.

For another example, the freeze event distortion value $freezing\_artifact\_value$ of the video stream is acquired by using the following formula (14):

$$freezing\_artifact\_value = \frac{a_9}{a_{10} + \frac{a_{11}}{fps \cdot f\_freezing\_length^{a_{12}} \cdot MV^{a_{13}}}} \qquad (14)$$

*fps* is the frame rate of the video stream; *f_freezing_length* is the freeze feature parameter of the video stream; and *MV* is the video motion feature parameter of the video stream. $a_9$, $a_{10}$, $a_{11}$, and $a_{12}$ are positive constants, where specific values may be obtained by means of training or an empirical value. For different resolutions, $a_{19}$, $a_{10}$, $a_{11}$, and $a_{12}$ may have different values. For example, in the case of a standard definition resolution, $a_{11}$ = 6.284277, $a_{12}$ = 0.725262, and $a_{13}$ = 0.089219; in the case of a 1280x720 resolution, $a_{11}$ = 4.04767, $a_{12}$ = 0.914548, and $a_{13}$ = 0.066144; and in the case of a 1920x1080 resolution, $a_{11}$ = 9.269669, $a_{12}$ = 0.758998, and $a_{13}$ = 0.064108. For another example, in the case of a standard definition resolution, $a_{11}$ = 6.2843, $a_{12}$ = 0.7253, and $a_{13}$ = 0.0892; in the case of a 1280x720 resolution, $a_{11}$ = 4.0477, $a_{12}$ = 0.9145, and $a_{13}$ = 0.0661; and in the case of a 1920x1080 resolution, $a_{11}$ = 9.2697, $a_{12}$ = 0.7590, and $a_{13}$ = 0.0641. Optionally, when $a_9$ is equal to 4, and $a_{10}$ is equal to 1, the freeze event distortion value is greater than or equal to 0 and less than or equal to 4 ($0.0 \leq$ *freezing_artifact_value* $\leq 4.0$); and when $a_{19}$ is equal to 1, and $a_{10}$ is equal to 1, the freeze event distortion value is greater than or equal to 0 and less than or equal to 1 ($0.0 \leq$ *freezing_artifact_value* $\leq 1.0$).

In this embodiment of the present invention, the freeze event distortion value of the video stream may also be determined directly according to the frame rate and the freeze feature parameter that are of the video stream.

For example, the freeze event distortion value *freezing_artifact_value* of the video stream may be determined according to a formula (15):

$$freezing\_artifact\_value = \frac{a_1}{a_2 + \dfrac{a_3}{fps \cdot f\_freezing\_length^{a_4}}}$$

(15)

*fps* is the frame rate of the video stream; *f_freezing_length* is the freeze feature parameter of the video stream; *MV* is the video motion feature parameter of the video stream; and $a_1$, $a_2$, $a_3$, and $a_4$ are positive constants, where specific values may be obtained by means of training or an empirical value, and may have different values in different resolutions. Optionally, when $a_1$ is equal to 4, and $a_2$ is equal to 1, the freeze event distortion value is greater than or equal to 0.0 and less than or equal to 4.0 ($0.0 \leq$ *freezing_artifact_value* $\leq 4.0$); and when $a_1$ is equal to 1, and $a_2$ is equal to 1, the freeze event distortion value is greater than or equal to 0.0 and less than or equal to 1.0 ($0.0 \leq$ *freezing_artifact_value* $\leq 1.0$).

Therefore, in this embodiment of the present invention, by acquiring a frame rate of a video stream and a freeze feature parameter correlated with duration of a freeze event of the video stream, and acquiring a freeze event distortion value of the video stream according to the frame rate of the video stream and the freeze feature parameter, when an assessment on a freeze event distortion degree is performed, factors considered are more comprehensive and more in line with subjective feelings of people, so that accuracy of distortion prediction is improved.

FIG. 2 is a schematic block diagram of an apparatus 200 for assessing a video freeze distortion degree according to an embodiment of the present invention. As shown in FIG. 2, the apparatus 200 includes:

a first acquiring unit 210, configured to acquire a frame rate and a freeze feature parameter of a freeze event that are of a video stream, where the freeze feature parameter of the freeze event is correlated with duration of the freeze event of the video stream, and the freeze event is used to represent a pause of the video stream; and

a second acquiring unit 220, configured to acquire a freeze event distortion value of the video stream according to the frame rate and the freeze feature parameter of the freeze event that are of the video stream, where the freeze event distortion value is used to represent a distortion degree of the video stream.

Optionally, the duration of the freeze event is represented by using freeze time or represented by using a quantity of freeze frames.

Optionally, when the duration of the freeze event is represented by using the quantity of freeze frames, that the freeze feature parameter of the freeze event is correlated with duration of the freeze event of the video stream includes: that the freeze feature parameter of the freeze event is represented by using a proportional relationship between the quantity of freeze frames and a total quantity of video frames of the video stream; or that the freeze feature parameter of the freeze event is represented by using a proportional relationship between the quantity of freeze frames and a quantity of continuous playings of the video stream.

Optionally, when the freeze feature parameter of the freeze event is represented by using the proportional relationship between the quantity of freeze frames and the total quantity of video frames of the video stream, the first acquiring unit 210 is specifically configured to: acquire the frame rate of the video stream; and determine the freeze feature parameter *f_freezing_length* of the freeze event of the video stream according to a formula

$$f\_freezing\_length = \frac{i\_total\_num\_freezing\_frames}{i\_total\_num\_frames},$$

where:

*i_total_num_frames* indicates the total quantity of video frames of the video stream*; i_total_num_freezing_frames* indicates a quantity of all freeze frames corresponding to the freeze event of the video stream; and *f_freezing_length* indicates the freeze feature parameter.

Optionally, the second acquiring unit 220 is specifically configured to:

acquire the freeze event distortion value of the video stream according to a

$$freezing\_artifact\_value = \frac{a_1}{a_2 + \dfrac{a_3}{fps \cdot f\_freezing\_length^{a_4}}}$$

formula ,

where:

*fps* is the frame rate of the video stream; *f_freezing_length* is the freeze feature parameter of the video stream; *freezing_artifact_value* is the freeze event distortion value; and $a_1$, $a_2$, $a_3$, and $a_4$ are positive constants.

Optionally, besides acquiring the frame rate and the freeze feature parameter that are of the video stream, the first acquiring unit 210 is further configured to acquire a video motion feature parameter that is of the video stream and is correlated with at least one of a motion change degree and motion consistency that are of the video stream; and the second acquiring unit 220 is specifically configured to acquire the freeze event distortion value of the video stream according to the video motion feature parameter, the frame rate, and the freeze feature parameter of the freeze event that are of the video stream.

Optionally, the first acquiring unit 210 is specifically configured to:

determine the video motion feature parameter of the video stream according to a motion vector of a coded frame that is before the freeze event of the video stream occurs; or
determine the video motion feature parameter of the video stream according to a motion vector of a coded frame that is after the freeze event of the video stream ends; or
determine the video motion feature parameter of the video stream according to a motion vector of a coded frame that is before the freeze event of the video stream occurs and a motion vector of a coded frame that is after the freeze event of the video stream ends; or
determine the video motion feature parameter of the video stream according to motion vectors of all coded frames of the video stream.

Optionally, the first acquiring unit 210 is specifically configured to:

determine the video motion feature parameter of the video stream according to a motion vector of the last decoded or displayed inter-frame coded frame that is before the freeze event of the video stream occurs.

Optionally, the second acquiring unit 220 is specifically configured to:

determine the freeze event distortion value of the video stream according

$$freezing\_artifact\_value = \frac{a_9}{a_{10} + \dfrac{a_{11}}{fps \cdot f\_freezing\_length^{a_{12}} \cdot MV^{a_{13}}}}$$

to a formula ,

where:

$fps$ is the frame rate of the video stream; $f\_freezing\_length$ is the freeze feature parameter of the freeze event of the video stream; $MV$ is the video motion feature parameter of the video stream; and $a_{19}$, $a_{10}$, $a_{11}$, $a_{12}$, and $a_{13}$ are positive constants.

Optionally, a direction of a correlation between the video motion feature parameter and the motion change degree of the video stream is consistent with a direction of a correlation between the video motion feature parameter and the freeze event distortion value, and a direction of a correlation between the video motion feature parameter and the motion consistency of the video stream is consistent with the direction of the correlation between the video motion feature parameter and the freeze event distortion value.

Optionally, the frame rate is in a positive correlation with the freeze event distortion value, and a direction of a correlation between the freeze feature parameter and the duration of the freeze event is consistent with a direction of a correlation between the freeze feature parameter and the freeze event distortion value.

The foregoing apparatus 200 for assessing video distortion quality may be a terminal, for example, a portable, pocket-sized, handheld, computer-built-in, or vehicle-mounted mobile apparatus; or the apparatus 200 may also be a server, or the like.

It should be understood that, the foregoing or other operations and/or functions of parts in the apparatus 200 for assessing video distortion quality according to this embodiment of the present invention are respectively for implementing corresponding processes of the method 100 in FIG. 1 and FIG. 2. For brevity, details are not described herein again.

Therefore, in this embodiment of the present invention, by acquiring a frame rate of a video stream and a freeze feature parameter correlated with duration of a freeze event of the video stream, and acquiring a freeze event distortion value of the video stream according to the frame rate of the video stream and the freeze feature parameter, when an assessment on a freeze event distortion degree is performed, factors considered are more comprehensive and more in line with subjective feelings of people, so that accuracy of distortion degree prediction is improved.

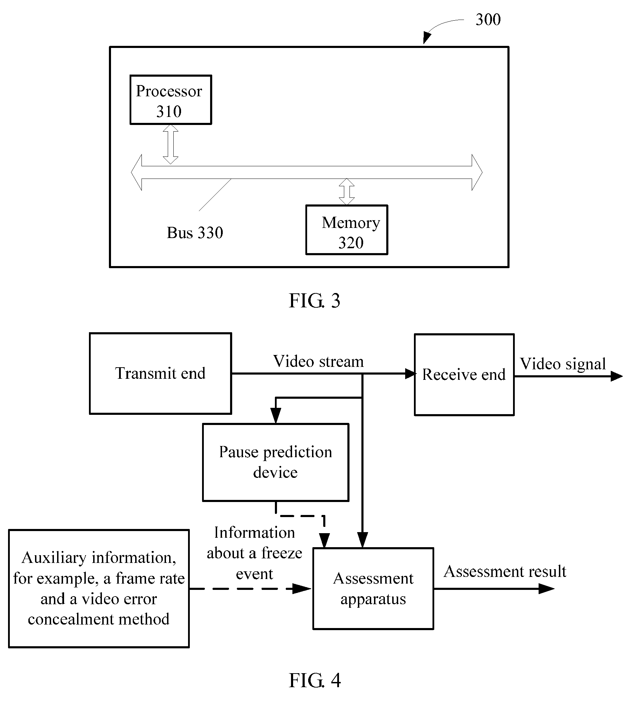

FIG. 3 is a schematic block diagram of an apparatus 300 for assessing video distortion quality according to an embodiment of the present invention. The apparatus 300 includes a processor 310, a memory 320, and a bus 330, where the processor 310 and the memory 320 are connected by using the bus 330.

The memory 320 stores a group of program code, and the processor 310 invokes the program code stored in the memory 320 and is configured to perform the following operations:

acquiring a frame rate and a freeze feature parameter of a freeze event that are of a video stream, where the freeze feature parameter of the freeze event is correlated with duration of the freeze event of the video stream, and the freeze event is used to represent a pause of the video stream; and

acquiring a freeze event distortion value of the video stream according to the frame rate and the freeze feature parameter of the freeze event that are of the video stream, where the freeze event distortion value is used to represent a distortion degree of the video stream.

Optionally, the duration of the freeze event is represented by using freeze time or represented by using a quantity of freeze frames.

Optionally, when the duration of the freeze event is represented by using the quantity of freeze frames, that the freeze feature parameter of the freeze event is correlated with duration of the freeze event of the video stream includes: that the freeze feature parameter of the freeze event is represented by using a proportional relationship between the quantity of freeze frames and a total quantity of video frames of the video stream; or that the freeze feature parameter of the freeze event is represented by using a proportional relationship between the quantity of freeze frames and a quantity of continuous playings of the video stream.

Optionally, when the freeze feature parameter of the freeze event is represented by using the proportional relationship between the quantity of freeze frames and the total quantity of video frames of the video stream, the processor 310 invokes the program code stored in the memory 320 and is specifically configured to perform the following operations:

acquiring the frame rate of the video stream; and

determining the freeze feature parameter $f\_freezing\_length$ of the video stream according to a formula

$$f\_freezing\_length = \frac{i\_total\_num\_freezing\_frames}{i\_total\_num\_frames},$$

where:

*i_total_num_frames* indicates the total quantity of video frames of the video stream; *i_total_num_freezing_frames* indicates a quantity of all freeze frames corresponding to the freeze event of the video stream; and *f_freezing_length* indicates the freeze feature parameter.

Optionally, the processor 310 invokes the program code stored in the memory 320 and is specifically configured to perform the following operation:

acquiring the freeze event distortion value of the video stream according to

$$freezing\_artifact\_value = \frac{a_1}{a_2 + \dfrac{a_3}{fps \cdot f\_freezing\_length^{a_4}}}$$

a formula , where:

*fps* is the frame rate of the video stream; *f_freezing_length* is the freeze feature parameter of the freeze event of the video stream; *freezing_artifact_value* is the freeze event distortion value; and $a_1$, $a_2$, $a_3$, and $a_4$ are positive constants.

Optionally, the processor 310 invokes the program code stored in the memory 320 and is further configured to perform the following operation: besides acquiring the frame rate and the freeze feature parameter that are of the video stream, further acquiring a video motion feature parameter that is of the video stream and is correlated with at least one of a motion change degree and motion consistency that are of the video stream; and is specifically configured to acquire the freeze event distortion value of the video stream according to the video motion feature parameter, the frame rate, and the freeze feature parameter of the freeze event that are of the video stream.

Optionally, the processor 310 invokes the program code stored in the memory 320 and is specifically configured to perform the following operation: determining the video motion feature parameter of the video stream according to a motion vector of a coded frame that is before the freeze event of the video stream occurs; or determining the video motion feature parameter of the video stream according to a motion vector of a coded frame that is after the freeze event of the video stream ends; or determining the video motion feature parameter of the video stream according to a motion vector of a coded frame that is before the freeze event of the video stream occurs and a motion vector of a coded frame that is after the freeze event of the video stream ends; or determining the video motion feature parameter of the video stream according to motion vectors of all coded frames of the video stream.

Optionally, the processor 310 invokes the program code stored in the memory 320 and is specifically configured to perform the following operation: determining the video motion feature parameter of the video stream according to a motion vector of the last decoded or displayed inter-frame coded frame that is before the freeze event of the video stream occurs.

Optionally, the processor 310 invokes the program code stored in the memory 320 and is specifically configured to perform the following operation:

determining the freeze event distortion value of the video stream according

$$freezing\_artifact\_value = \frac{a_9}{a_{10} + \dfrac{a_{11}}{fps \cdot f\_freezing\_length^{a_{12}} \cdot MV^{a_{13}}}}$$

to a formula
where:

*fps* is the frame rate of the video stream; *f_freezing_length* is the freeze feature parameter of the freeze event of the video stream; *MV* is the video motion feature parameter of the video stream; and $a_{19}$, $a_{10}$, $a_{11}$, $a_{12}$, and $a_{13}$ are positive constants. Optionally, a direction of a correlation between the video motion feature parameter and the motion change degree of the video stream is consistent with a direction of a correlation between the video motion feature parameter and the freeze event distortion value, and a direction of a correlation between the video motion feature parameter and the motion consistency of the video stream is consistent with the direction of the correlation between the video motion feature parameter and the freeze event distortion value.

Optionally, the frame rate is in a positive correlation with the freeze event distortion value, and a direction of a correlation between the freeze feature parameter and the duration of the freeze event is consistent with a direction of a correlation between the freeze feature parameter and the freeze event distortion value.

The foregoing apparatus 300 for assessing video distortion quality may be a terminal, for example, a portable, pocket-sized, handheld, computer-built-in, or vehicle-mounted mobile apparatus; or the apparatus 300 may also be a server, or the like.

It should be understood that, the foregoing or other operations and/or functions of parts in the apparatus 300 for assessing video distortion quality according to this embodiment of the present invention are respectively for implementing corresponding processes of the method 100 in FIG. 1 and FIG. 2. For brevity, details are not described herein again.

Therefore, in this embodiment of the present invention, by acquiring a frame rate of a video stream and a freeze feature parameter correlated with duration of a freeze event of the video stream, and acquiring a freeze event distortion value of the video stream according to the frame rate of the video stream and the freeze feature parameter, when an assessment on a freeze event distortion degree is performed, factors considered are more comprehensive and more in line with subjective feelings of people, so that accuracy of distortion degree prediction is improved.

Apparatuses 200 and 300 in the embodiments of the present invention may be a device independent of a receive end of the video stream, or may be a device integrated inside the receive end.

FIG. 4 is a diagram of a scenario in which an apparatus for assessing a video freeze distortion degree is applied according to an embodiment of the present invention.

As shown in FIG. 4, the apparatus for assessing a video freeze distortion degree is located between a transmit end and a receive end that are of a video stream. A video stream sent by the transmit end is transmitted to the receive end through one channel and transmitted to the assessment apparatus and a pause prediction device through another channel. The assessment apparatus may acquire, from the pause prediction device, information (for example, duration of a freeze event (which may be represented by using time) or a starting position of the freeze event) about a freeze event that is of the video stream and is caused by a network delay, and may acquire, from the outside, a frame rate of the video stream and other auxiliary information, for example, a video error concealment method used by a video decoder at the receive end, so that a freeze event caused by a network packet loss may be acquired, and information (for example, duration of the freeze event (which may be represented by using a quantity of freeze frames)) about the freeze event is obtained. After acquiring a freeze event distortion value, the apparatus for assessing a video freeze distortion degree may output the freeze event distortion value as an assessment result, or may output a comprehensive assessment result obtained by combining a compression distortion value and/or compression quality and/or other distortion quality.

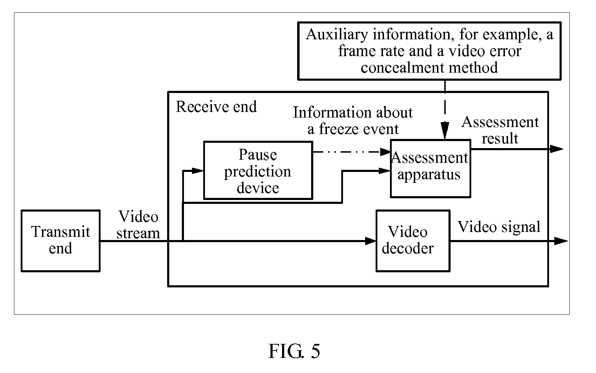

FIG. 5 is a diagram of a scenario in which an apparatus for assessing a video freeze distortion degree is applied according to another embodiment of the present invention.

As shown in FIG. 5, the apparatus for assessing a video freeze distortion degree is integrated inside a receive end of a video stream. After arriving at the receive end, a video stream sent by a transmit end is transmitted to a video decoder through one channel and transmitted to the assessment apparatus and a pause prediction device through another channel. The assessment apparatus may acquire, from the pause prediction device, information (for example, duration of a freeze event (which may be represented by using time) or a starting position of the freeze event) about a freeze event that is of the video stream and is caused by a network delay, and may acquire, from the outside, a frame rate of the video stream and other auxiliary information, for example, an error correction policy used by the video decoder at the receive end, so that a freeze event caused by a network packet loss may be acquired, and information (for example, a quantity of freeze frames) about the freeze event is obtained. After acquiring a freeze event distortion value, the apparatus for assessing a video freeze distortion degree may output the freeze event distortion value as an assessment result, or may output a comprehensive assessment result obtained by combining a compression distortion value and/or compression quality and/or other distortion quality.

A video error concealment method described in this embodiment of the present invention may also be understood as a packet loss concealment method (Packet loss concealment method). In this technology, a lost packet is not retrieved, and an adverse effect (for example, artifacts or block artifacts) on a decoded video caused by a packet loss is only concealed. For example, an image block or a video frame that is lost or affected by error propagation is recovered by using an adjacent error-free image block, or information (for example, pixels or a motion vector) about a previously decoded or displayed error-free image block, or a previously and correctly decoded or displayed error-free video frame.

The apparatus for assessing a video freeze distortion degree in this embodiment of the present invention may also be applied in another scenario. For example, the apparatus for assessing a video freeze distortion degree is integrated into a receive end including a video stream caching device, and acquires information about a freeze event that is of a video stream and is caused by a network delay from the video stream caching device.

Therefore, in this embodiment of the present invention, by acquiring a frame rate of a video stream and a freeze feature parameter correlated with duration of a freeze event of the video stream, and acquiring a freeze event distortion value of the video stream according to the frame rate of the video stream and the freeze feature parameter, when an assessment on a freeze event distortion degree is performed, factors considered are more comprehensive and more in line with subjective feelings of people, so that accuracy of distortion degree prediction is improved.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present invention.

Methods or steps described in the embodiments disclosed in this specification may be implemented by hardware, a software program executed by a processor, or a combination thereof. The software program may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The present invention is described in detail with reference to the accompany drawings and in combination with the exemplary embodiments, but the present invention is not limited thereto.

**Claims**

1. A method for assessing a video freeze distortion degree, comprising:

acquiring a frame rate and a freeze feature parameter of a freeze event that are of a video stream, wherein the freeze feature parameter of the freeze event is correlated with duration of the freeze event of the video stream, and the freeze event is used to represent a pause of the video stream, wherein the duration of the freeze event is represented by using a quantity of freeze frames;
the freeze feature parameter of the freeze event is correlated with duration of the freeze event of the video stream comprises:

that the freeze feature parameter of the freeze event is represented by using a proportional relationship between the quantity of freeze frames and a total quantity of video frames of the video stream, or
that the freeze feature parameter of the freeze event is represented by using a proportional relationship between the quantity of freeze frames and a quantity of continuous playing of the video stream;
and
acquiring a freeze event distortion value of the video stream according to the frame rate and the freeze feature parameter of the freeze event that are of the video stream, wherein the freeze event distortion value is used to represent a distortion degree of the video stream;

wherein the acquiring a freeze event distortion value of the video stream according to the frame rate and the freeze feature parameter of the freeze event that are of the video stream comprises:

acquiring the freeze event distortion value of the video stream according to a

$$freezing\_artifact\_value = \frac{a_1}{a_2 + \dfrac{a_3}{fps \cdot f\_freezing\_length^{a_4}}}$$

formula , wherein:

$fps$ is the frame rate of the video stream; $f\_freezing\_length$ is the freeze feature parameter of the freeze event of the video stream; $freezing\_artifact\_value$ is the freeze event distortion value; and $a_1$, $a_2$, $a_3$, and $a_4$ are positive constants.

2. A method for assessing a video freeze distortion degree, comprising:

acquiring a frame rate and a freeze feature parameter of a freeze event that are of a video stream, wherein the freeze feature parameter of the freeze event is correlated with duration of the freeze event of the video stream, and the freeze event is used to represent a pause of the video stream, wherein the duration of the freeze event is represented by using a quantity of freeze frames;
the freeze feature parameter of the freeze event is correlated with duration of the freeze event of the video stream comprises:

that the freeze feature parameter of the freeze event is represented by using a proportional relationship between the quantity of freeze frames and a total quantity of video frames of the video stream, or
that the freeze feature parameter of the freeze event is represented by using a proportional relationship between the quantity of freeze frames and a quantity of continuous playing of the video stream; and
acquiring a freeze event distortion value of the video stream according to the frame rate and the freeze feature parameter of the freeze event that are of the video stream, wherein the freeze event distortion value is used to represent a distortion degree of the video stream;

wherein the method further comprises:

acquiring a video motion feature parameter that is of the video stream and is correlated with at least one of a motion change degree and motion consistency that are of the video stream; and

the acquiring a freeze event distortion value of the video stream according to the frame rate and the freeze feature parameter of the freeze event that are of the video stream comprises:

acquiring the freeze event distortion value of the video stream according to the video motion feature parameter, the frame rate, and the freeze feature parameter of the freeze event that are of the video stream;

wherein the acquiring the freeze event distortion value of the video stream according to the video motion feature parameter, the frame rate, and the freeze feature parameter of the freeze event that are of the video stream comprises:

determining the freeze event distortion value of the video stream according to a

$$freezing\_artifact\_value = \cfrac{a_9}{a_{10} + \cfrac{a_{11}}{fps \cdot f\_freezing\_length^{a_{12}} \cdot MV^{a_{13}}}}$$

formula ,
wherein:

$fps$ is the frame rate of the video stream; $f\_freezing\_length$ is the freeze feature parameter of the freeze event of the video stream; $MV$ is the video motion feature parameter of the video stream; and $a_9$, $a_{10}$, $a_{11}$, $a_{12}$, and $a_{13}$ are positive constants.

3. The method according to claim 2, wherein the acquiring a video motion feature parameter of the video stream comprises:

determining the video motion feature parameter of the video stream according to a motion vector of a coded frame that is before the freeze event of the video stream occurs; or
determining the video motion feature parameter of the video stream according to a motion vector of a coded frame that is after the freeze event of the video stream ends; or
determining the video motion feature parameter of the video stream according to a motion vector of a coded frame that is before the freeze event of the video stream occurs and a motion vector of a coded frame that is after the freeze event of the video stream ends; or
determining the video motion feature parameter of the video stream according to motion vectors of all coded frames of the video stream.

4. The method according to claim 3, wherein the determining the video motion feature parameter of the video stream according to a motion vector of a coded frame that is before the freeze event of the video stream occurs comprises:

determining the video motion feature parameter of the video stream according to a motion vector of the last decoded or displayed coded frame that is before the freeze event of the video stream occurs.

5. The method according to any one of claims 2 to 4, wherein a direction of a correlation between the video motion feature parameter and the motion change degree of the video stream is consistent with a direction of a correlation between the video motion feature parameter and the freeze event distortion value, and a direction of a correlation between the video motion feature parameter and the motion consistency of the video stream is consistent with the direction of the correlation between the video motion feature parameter and the freeze event distortion value.

6. The method according to any one of claims 1 to 5, wherein the frame rate is in a positive correlation with the freeze event distortion value, and a direction of a correlation between the freeze feature parameter of the freeze event and the duration of the freeze event is consistent with a direction of a correlation between the freeze feature parameter of the freeze event and the freeze event distortion value.

7. The method according to any one of claim 1-6, wherein when the freeze feature parameter of the freeze event is represented by using the proportional relationship between the quantity of freeze frames and the total quantity of video frames of the video stream, the acquiring a frame rate and a freeze feature parameter of a freeze event that are of a video stream comprises: acquiring the frame rate of the video stream; and
determining the freeze feature parameter *f_freezing_length* of the freeze event of the video stream according to a formula

$$f\_freezing\_length = \frac{i\_total\_num\_freezing\_frames}{i\_total\_num\_frames},$$

wherein:

*i_total_num_frames* indicates the total quantity of video frames of the video stream; *i_total_num_freezing_frames* indicates a quantity of all freeze frames corresponding to the freeze event of the video stream; and *f_freezing_length* indicates the freeze feature parameter of the freeze event.

8. An apparatus for assessing a video freeze distortion degree, comprising:

a first acquiring unit, configured to acquire a frame rate and a freeze feature parameter of a freeze event that are of a video stream, wherein the freeze feature parameter of the freeze event is correlated with duration of the freeze event of the video stream, the duration of the freeze event is represented by using a quantity of freeze frames; and the freeze event is used to represent a pause of the video stream;
the freeze feature parameter of the freeze event is correlated with duration of the freeze event of the video stream comprises:

that the freeze feature parameter of the freeze event is represented by using a proportional relationship between the quantity of freeze frames and a total quantity of video frames of the video stream, or
that the freeze feature parameter of the freeze event is represented by using a proportional relationship between the quantity of freeze frames and a quantity of continuous playing of the video stream; and
a second acquiring unit, configured to acquire a freeze event distortion value of the video stream according to the frame rate and the freeze feature parameter of the freeze event that are of the video stream, wherein the freeze event distortion value is used to represent a distortion degree of the video stream;

wherein the second acquiring unit is specifically configured to:

acquire the freeze event distortion value of the video stream according to a

$$freezing\_artifact\_value = \cfrac{a_1}{a_2 + \cfrac{a_3}{fps \cdot f\_freezing\_length^{a_4}}}$$

formula , wherein:

fPs is the frame rate of the video stream; f_freezing_length is the freeze feature parameter of the freeze event of the video stream; freezing_artifact_value is the freeze event distortion value; and $a_1$, $a_2$, $a_3$, and $a_4$ are positive constants.

9. The apparatus according to claim 8, wherein when the freeze feature parameter of the freeze event is represented by using the proportional relationship between the quantity of freeze frames and the total quantity of video frames of the video stream, the first acquiring unit is specifically configured to: acquire the frame rate of the video stream; and determine the freeze feature parameter f_freezing_length of the freeze event of the video stream according to a formula

$$f\_freezing\_length = \frac{i\_total\_num\_freezing\_frames}{i\_total\_num\_frames},$$

wherein:

i_total_num_frames indicates the total quantity of video frames of the video stream; i_total_num_freezing_frames indicates a quantity of all freeze frames corresponding to the freeze event of the video stream; and f_freezing_length indicates the freeze feature parameter of the freeze event.

**Patentansprüche**

1. Verfahren zum Abschätzen eines Videoeinfrierverzerrungsgrads, das Folgendes umfasst:

Erfassen einer Rahmenrate und eines Einfriermerkmalparameters eines Einfrierereignisses, die zu einem Videostrom gehören, wobei der Einfriermerkmalparameter des Einfrierereignisses mit der Dauer des Einfrierereignisses des Videostroms korreliert und das Einfrierereignis verwendet wird, um eine Pause des Videostroms zu repräsentieren, wobei die Dauer des Einfrierereignisses durch Verwenden einer Anzahl von Einfrierrahmen repräsentiert ist;

wobei, dass der Einfriermerkmalparameter des Einfrierereignisses mit einer Dauer des Einfrierereignisses des Videostroms korreliert, Folgendes umfasst:

dass der Einfriermerkmalparameter des Einfrierereignisses durch Verwenden einer proportionalen Beziehung zwischen der Anzahl der Einfrierrahmen und einer Gesamtzahl von Videorahmen des Videostroms repräsentiert wird oder
dass der Einfriermerkmalparameter des Einfrierereignisses durch Verwenden einer proportionalen Beziehung zwischen der Anzahl der Einfrierrahmen und einer Anzahl, in der der Videostrom kontinuierlich abgespielt wird, repräsentiert wird;
und
Erfassen eines Einfrierereignisverzerrungswerts des Videostroms gemäß der Rahmenrate und dem Einfriermerkmalparameter des Einfrierereignisses, die zu dem Videostrom gehören, wobei der Einfrierereignisverzerrungswert verwendet wird, um einen Verzerrungsgrad des Videostroms zu repräsentieren;

wobei das Erfassen eines Einfrierereignisverzerrungswerts des Videostroms gemäß der Rahmenrate und dem Einfriermerkmalparameter des Einfrierereignisses, die zu dem Videostrom gehören, Folgendes umfasst:

Erfassen des Einfrierereignisverzerrungswerts des Videostroms gemäß einer Formel

$$freezing\_artifact\_value = \cfrac{a_1}{a_2 + \cfrac{a_3}{fps \cdot f\_freezing\_length^{a_4}}},$$

wobei:

*fps* die Rahmenrate des Videostroms ist; *f_freezing_length* der Einfriermerkmalparameter des Einfrierereignisses des Videostroms ist; *freezing artifact_value* der Einfrierereignisverzerrungswert ist; und $a_1$, $a_2$, $a_3$, und $a_4$ positive Konstanten sind.

2. Verfahren zum Abschätzen eines Videoeinfrierverzerrungsgrads, das Folgendes umfasst:

Erfassen einer Rahmenrate und eines Einfriermerkmalparameters eines Einfrierereignisses, die zu einem Videostrom gehören, wobei der Einfriermerkmalparameter des Einfrierereignisses mit der Dauer des Einfrierereignisses des Videostroms korreliert und das Einfrierereignis verwendet wird, um eine Pause des Videostroms zu repräsentieren, wobei die Dauer des Einfrierereignisses durch Verwenden einer Anzahl von Einfrierrahmen repräsentiert ist;

wobei, dass der Einfriermerkmalparameter des Einfrierereignisses mit einer Dauer des Einfrierereignisses des Videostroms korreliert, Folgendes umfasst:

dass der Einfriermerkmalparameter des Einfrierereignisses durch Verwenden einer proportionalen Beziehung zwischen der Anzahl der Einfrierrahmen und einer Gesamtzahl von Videorahmen des Videostroms repräsentiert wird oder
dass der Einfriermerkmalparameter des Einfrierereignisses durch Verwenden einer proportionalen Beziehung zwischen der Anzahl der Einfrierrahmen und einer Anzahl, in der der Videostrom kontinuierlich abgespielt wird, repräsentiert wird;
und
Erfassen eines Einfrierereignisverzerrungswerts des Videostroms gemäß der Rahmenrate und dem Einfriermerkmalparameter des Einfrierereignisses, die zu dem Videostrom gehören, wobei der Einfrierereignisverzerrungswert verwendet wird, um einen Verzerrungsgrad des Videostroms zu repräsentieren;

wobei das Verfahren ferner Folgendes umfasst:

Erfassen eines Videobewegungsmerkmalparameters, der zu dem Videostrom gehört und mit einem Bewegungsänderungsgrad und/oder einer Bewegungskonsistenz, die zu dem Videostrom gehören, korreliert; und

wobei das Erfassen eines Einfrierereignisverzerrungswerts des Videostroms gemäß der Rahmenrate und dem Einfriermerkmalparameter des Einfrierereignisses, die zu dem Videostrom gehören, Folgendes umfasst:

Erfassen des Einfrierereignisverzerrungswerts des Videostroms gemäß dem Videobewegungsmerkmalparameter, der Rahmenrate und dem Einfriermerkmalparameter des Einfrierereignisses, die zu dem Videostrom gehören;

wobei das Erfassen des Einfrierereignisverzerrungswerts des Videostroms gemäß dem Videobewegungsmerkmalparameter, der Rahmenrate und dem Einfriermerkmalparameter des Einfrierereignisses, die zu dem Videostrom gehören, Folgendes umfasst:

Bestimmen des Einfrierereignisverzerrungswert des Videostroms gemäß einer Formel

$$freezing\_artifact\_value = \cfrac{a_9}{a_{10} + \cfrac{a_{11}}{fps \cdot f\_freezing\_length^{a_{12}} \cdot MV^{a_{13}}}},$$

wobei:

*fps* die Rahmenrate des Videostroms ist; *f_freezing_length* der Einfriermerkmalparameter des Einfrierereignisses des Videostroms ist; *MV* der Videobewegungsmerkmalparameter des Videostroms ist; und $a_9$, $a_{10}$, $a_{11}$, $a_{12}$ und $a_{13}$ positive Konstanten sind.

3. Verfahren nach Anspruch 2, wobei das Erfassen eines Videobewegungsmerkmalparameters des Videostroms Folgendes umfasst:

Bestimmen des Videobewegungsmerkmalparameters des Videostroms gemäß einem Bewegungsvektor eines codierten Rahmens, der vor dem Auftreten des Einfrierereignisses des Videostroms ist; oder
Bestimmen des Videobewegungsmerkmalparameters des Videostroms gemäß einem Bewegungsvektor eines codierten Rahmens, der nach dem Ende des Einfrierereignisses des Videostroms ist; oder
Bestimmen des Videobewegungsmerkmalparameters des Videostroms gemäß einem Bewegungsvektor eines codierten Rahmens, der vor dem Auftreten des Einfrierereignisses des Videostroms ist, und einem Bewegungsvektor eines codierten Rahmens, der nach dem Ende des Einfrierereignisses des Videostroms ist; oder
Bestimmen des Videobewegungsmerkmalparameters des Videostroms gemäß Bewegungsvektoren aller codierten Rahmen des Videostroms.

4. Verfahren nach Anspruch 3, wobei das Bestimmen des Videobewegungsmerkmalparameters des Videostroms gemäß einem Bewegungsvektor eines codierten Rahmens, der vor dem Auftreten des Einfrierereignisses des Videostroms ist, Folgendes umfasst:

Bestimmen des Videobewegungsmerkmalparameters des Videostroms gemäß einem Bewegungsvektor des letzten decodierten oder angezeigten codierten Rahmens, der vor dem Auftreten des Einfrierereignisses des Videostroms ist.

5. Verfahren nach einem der Ansprüche 2 bis 4, wobei eine Richtung einer Korrelation zwischen dem Videobewegungsmerkmalparameter und dem Bewegungsänderungsgrad des Videostroms mit einer Richtung einer Korrelation zwischen dem Videobewegungsmerkmalparameter und dem Einfrierereignisverzerrungswert konsistent ist, und eine Richtung einer Korrelation zwischen dem Videobewegungsmerkmalparameter und der Bewegungskonsistenz des Videostroms mit der Richtung der Korrelation zwischen dem Videobewegungsmerkmalparameter und dem Einfrierereignisverzerrungswert konsistent ist.

6. Verfahren nach einem der Ansprüche 1 bis 5, wobei die Rahmenrate in einer positiven Korrelation mit dem Einfrierereignisverzerrungswert ist, und eine Richtung einer Korrelation zwischen dem Einfriermerkmalparameter des Einfrierereignisses und der Dauer des Einfrierereignisses mit einer Richtung einer Korrelation zwischen dem Einfriermerkmalparameter des Einfrierereignisses und dem Einfrierereignisverzerrungswert konsistent ist.

7. Verfahren nach einem der Ansprüche 1-6, wobei, wenn der Einfriermerkmalparameter des Einfrierereignisses durch Verwenden der proportionalen Beziehung zwischen der Anzahl von Einfrierrahmen und der Gesamtzahl von Videorahmen des Videostroms repräsentiert ist, das Erfassen einer Rahmenrate und eines Einfriermerkmalparameters eines Einfrierereignisses, die zu einem Videostrom gehören, Folgendes umfasst:

Erfassen der Rahmenrate des Videostroms; und
Bestimmen des Einfriermerkmalparameters *f_freezing_length* des Einfrierereignisses des Videostroms gemäß einer Formel

$$f\_freezing\_length = \frac{i\_total\_num\_freezing\_frames}{i\_total\_num\_frames},$$

wobei:

*i_total_num_frames* die Gesamtzahl von Videorahmen des Videostroms angibt;
*i_total_num_freezing_frames* eine Anzahl aller Einfrierrahmen angibt, die dem Einfrierereignis des Videostroms entsprechen; und *f_freezing_length* den Einfriermerkmalparameter des Einfrierereignisses angibt.

8. Vorrichtung zum Abschätzen eines Videoeinfrierverzerrungsgrads, die Folgendes umfasst:

eine erste Erfassungseinheit, die konfiguriert ist, eine Rahmenrate und einen Einfriermerkmalparameter eines Einfrierereignisses, die zu einem Videostrom gehören, zu erfassen, wobei der Einfriermerkmalparameter des Einfrierereignisses mit der Dauer des Einfrierereignisses des Videostroms korreliert, die Dauer des Einfrierereignisses durch Verwenden einer Anzahl von Einfrierrahmen repräsentiert ist; und das Einfrierereignis verwendet wird, um eine Pause des Videostroms zu repräsentieren;

wobei, dass der Einfriermerkmalparameter des Einfrierereignisses mit einer Dauer des Einfrierereignisses des Videostroms korreliert, Folgendes umfasst:

dass der Einfriermerkmalparameter des Einfrierereignisses durch Verwenden einer proportionalen Beziehung zwischen der Anzahl der Einfrierrahmen und einer Gesamtzahl von Videorahmen des Videostroms repräsentiert wird oder
dass der Einfriermerkmalparameter des Einfrierereignisses durch Verwenden einer proportionalen Beziehung zwischen der Anzahl der Einfrierrahmen und einer Anzahl, in der der Videostrom kontinuierlich abgespielt wird, repräsentiert wird;
und

eine zweite Erfassungseinheit, die konfiguriert ist, einen Einfrierereignisverzerrungswert des Videostroms gemäß der Rahmenrate und dem Einfriermerkmalparameter des Einfrierereignisses, die zu dem Videostrom gehören, zu erfassen, wobei der Einfrierereignisverzerrungswert verwendet wird, um einen Verzerrungsgrad des Videostroms zu repräsentieren;

wobei die zweite Erfassungseinheit insbesondere konfiguriert ist:

den Einfrierereignisverzerrungswert des Videostroms gemäß einer Formel

$$freezing\_artifact\_value = \cfrac{a_1}{a_2 + \cfrac{a_3}{fps \cdot f\_freezing\_length^{a_4}}}$$

zu erfassen, wobei:

$fps$ die Rahmenrate des Videostroms ist; $f\_freezing\_length$ der Einfriermerkmalparameter des Einfrierereignisses des Videostroms ist;
$freezing\_artifact\_value$ der Einfrierereignisverzerrungswert ist; und $a_1$, $a_2$, $a_3$ und $a_4$ positive Konstanten sind.

9. Vorrichtung nach Anspruch 8, wobei dann, wenn der Einfriermerkmalparameter des Einfrierereignisses durch Verwenden der proportionalen Beziehung zwischen der Anzahl von Einfrierrahmen und der Gesamtzahl von Videorahmen des Videostroms repräsentiert wird, die erste Erfassungseinheit insbesondere konfiguriert ist: die Rahmenrate des Videostroms zu erfassen; und
den Einfriermerkmalparameter $f\_freezing\_length$ des Einfrierereignisses des Videostroms gemäß einer Formel

$$f\_freezing\_length = \frac{i\_total\_num\_freezing\_frames}{i\_total\_num\_frames}$$

zu bestimmen, wobei:

$i\_total\_num\_frames$ die Gesamtzahl von Videorahmen des Videostroms angibt;
$i\_total\_num\_freezing\_frames$ eine Anzahl aller Einfrierrahmen angibt, die dem Einfrierereignis des Videostroms entsprechen; und $f\_freezing\_length$ den Einfriermerkmalparameter des Einfrierereignisses angibt.

**Revendications**

1. Procédé d'évaluation du degré de distorsion statique d'une vidéo, comprenant :

l'acquisition d'une fréquence de trame et d'un paramètre caractéristique statique d'un événement statique qui appartiennent à un flux vidéo, le paramètre caractéristique statique de l'événement statique étant corrélé à la durée de l'événement statique du flux vidéo, et l'événement statique étant utilisé pour représenter une pause du flux vidéo, la durée de l'événement statique étant représentée en utilisant une certaine quantité de trames statiques ;
la corrélation du paramètre caractéristique statique de l'événement statique à la durée de l'événement statique du flux vidéo comprenant :

la représentation du paramètre caractéristique statique de l'événement statique à l'aide d'une relation proportionnelle entre la quantité de trames statiques et une quantité totale de trames vidéo du flux vidéo, ou la représentation du paramètre caractéristique statique de l'événement statique à l'aide d'une relation proportionnelle entre la quantité de trames statiques et une quantité de lecture continue du flux vidéo ; et

l'acquisition d'une valeur de distorsion de l'événement statique du flux vidéo en fonction de la fréquence de trame et du paramètre caractéristique statique de l'événement statique qui appartiennent au flux vidéo, la valeur de distorsion de l'événement statique étant utilisée pour représenter un degré de distorsion du flux vidéo ;

dans lequel l'acquisition d'une valeur de distorsion de l'événement statique du flux vidéo en fonction de la fréquence de trame et du paramètre caractéristique statique de l'événement statique qui appartiennent au flux vidéo comprend :

l'acquisition de la valeur de distorsion de l'événement statique du flux vidéo selon une formule

$$valeur\_artéfact\_statique = \cfrac{a_1}{a_2 + \cfrac{a_3}{fps \cdot f\_longueur\_statique^{a_4}}},$$ dans

laquelle :

*fps* est la fréquence de trame du flux vidéo ; *f_longueur_statique* est le paramètre caractéristique statique de l'événement statique du flux vidéo ;
*valeur_artéfact_statique* est la valeur de distorsion de l'événement statique ; et $a_1$, $a_2$, $a_3$ et $a_4$ sont des constantes positives.

2. Procédé d'évaluation du degré de distorsion statique d'une vidéo, comprenant :

l'acquisition d'une fréquence de trame et d'un paramètre caractéristique statique d'un événement statique qui appartiennent à un flux vidéo, le paramètre caractéristique statique de l'événement statique étant corrélé à la durée de l'événement statique du flux vidéo, et l'événement statique étant utilisé pour représenter une pause du flux vidéo, la durée de l'événement statique étant représentée en utilisant une certaine quantité de trames statiques ;
la corrélation du paramètre caractéristique statique de l'événement statique à la durée de l'événement statique du flux vidéo comprenant :

la représentation du paramètre caractéristique statique de l'événement statique à l'aide d'une relation proportionnelle entre la quantité de trames statiques et une quantité totale de trames vidéo du flux vidéo, ou la représentation du paramètre caractéristique statique de l'événement statique à l'aide d'une relation proportionnelle entre la quantité de trames statiques et une quantité de lecture continue du flux vidéo ; et

l'acquisition d'une valeur de distorsion de l'événement statique du flux vidéo en fonction de la fréquence de trame et du paramètre caractéristique statique de l'événement statique qui appartiennent au flux vidéo, la valeur de distorsion de l'événement statique étant utilisée pour représenter un degré de distorsion du flux vidéo ;

le procédé comprenant en outre :

l'acquisition d'un paramètre caractéristique de mouvement vidéo qui appartient au flux vidéo et est corrélé à un degré de variation de mouvement et/ou une cohérence de mouvement qui appartiennent au flux vidéo ; et

l'acquisition d'une valeur de distorsion de l'événement statique du flux vidéo en fonction de la fréquence de trame et du paramètre caractéristique statique de l'événement statique qui appartiennent au flux vidéo comprenant :

l'acquisition de la valeur de distorsion de l'événement statique du flux vidéo en fonction du paramètre caractéristique de mouvement vidéo, de la fréquence de trame et du paramètre caractéristique statique de l'événement statique qui appartiennent au flux vidéo ;

dans lequel l'acquisition de la valeur de distorsion de l'événement statique du flux vidéo en fonction du paramètre caractéristique de mouvement vidéo, de la fréquence de trame et du paramètre caractéristique statique de l'événement statique qui appartiennent au flux vidéo comprend :

la détermination de la valeur de distorsion de l'événement statique du flux vidéo selon une formule

$$valeur\_artéfact\_statique = \cfrac{a_9}{a_{10} + \cfrac{a_{11}}{fps \cdot f\_longueur\_statique^{a_{12}} \cdot MV^{a_{13}}}},$$

dans laquelle :
$fps$ est la fréquence de trame du flux vidéo ; $f\_longueur\_$statique est le paramètre caractéristique statique de l'événement statique du flux vidéo ; $MV$ est le paramètre caractéristique de mouvement vidéo du flux vidéo ; et $a_9$, $a_{10}$, $a_{11}$, $a_{12}$ et $a_{13}$ sont des constantes positives.

3. Procédé selon la revendication 2, dans lequel l'acquisition d'un paramètre caractéristique de mouvement vidéo du flux vidéo comprend :

la détermination du paramètre caractéristique de mouvement vidéo du flux vidéo en fonction d'un vecteur de mouvement d'une trame codée qui se situe avant que l'événement statique du flux vidéo se produise ; ou la détermination du paramètre caractéristique de mouvement vidéo du flux vidéo en fonction d'un vecteur de mouvement d'une trame codée qui se situe après que l'événement statique du flux vidéo s'est achevé ; ou la détermination du paramètre caractéristique de mouvement vidéo du flux vidéo en fonction d'un vecteur de mouvement d'une trame codée qui se situe avant que l'événement statique du flux vidéo se produise et d'un vecteur de mouvement d'une trame codée qui se situe après que l'événement statique du flux vidéo s'est achevé ; ou la détermination du paramètre caractéristique de mouvement vidéo du flux vidéo en fonction de vecteurs de mouvement de toutes les trames codées du flux vidéo.

4. Procédé selon la revendication 3, dans lequel la détermination du paramètre caractéristique de mouvement vidéo du flux vidéo en fonction d'un vecteur de mouvement d'une trame codée qui se situe avant que l'événement statique du flux vidéo se produise comprend :

la détermination du paramètre caractéristique de mouvement vidéo du flux vidéo en fonction d'un vecteur de mouvement de la dernière trame décodée ou codée affichée qui se situe avant que l'événement statique du flux vidéo se produise.

5. Procédé selon l'une quelconque des revendications 2 à 4, dans lequel une direction d'une corrélation entre le paramètre caractéristique de mouvement vidéo et le degré de variation de mouvement du flux vidéo est cohérente avec une direction d'une corrélation entre le paramètre caractéristique de mouvement vidéo et la valeur de distorsion de l'événement statique, et une direction d'une corrélation entre le paramètre caractéristique de mouvement vidéo et la cohérence de mouvement du flux vidéo est cohérente avec la direction de la corrélation entre le paramètre caractéristique de mouvement vidéo et la valeur de distorsion de l'événement statique.

6. Procédé selon l'une quelconque des revendications 1 à 5, dans lequel la fréquence de trame est en corrélation positive avec la valeur de distorsion de l'événement statique, et une direction d'une corrélation entre le paramètre caractéristique statique de l'événement statique et la durée de l'événement statique est cohérente avec une direction d'une corrélation entre le paramètre caractéristique statique de l'événement statique et la valeur de distorsion de l'événement statique.

**7.** Procédé selon l'une quelconque des revendications 1 à 6, dans lequel quand le paramètre caractéristique statique de l'événement statique est représenté à l'aide de la relation proportionnelle entre la quantité de trames statiques et la quantité totale de trames vidéo du flux vidéo, l'acquisition d'une fréquence de trame et d'un paramètre caractéristique statique d'un événement statique qui appartiennent à un flux vidéo comprend : l'acquisition de la fréquence de trame du flux vidéo ; et

la détermination du paramètre caractéristique statique *f_longueur_statique* de l'événement statique du flux vidéo selon une formule

$$f\_longueur\_statique = \frac{i\_nombre\_total\_trames\_statiques}{i\_nombre\_total\_trames},$$

dans laquelle :

*i_nombre_total_trames* indique la quantité totale de trames vidéo du flux vidéo ;
*i_nombre_total_trames_statiques* indique une quantité de toutes les trames statiques correspondant à l'événement statique du flux vidéo ; et *f_longueur_statique* indique le paramètre caractéristique statique de l'événement statique.

**8.** Appareil servant à évaluer le degré de distorsion statique d'une vidéo, comprenant :

une première unité d'acquisition, configurée pour acquérir une fréquence de trame et
un paramètre caractéristique statique d'un événement statique qui appartiennent à un flux vidéo, le paramètre caractéristique statique de l'événement statique étant corrélé à la durée de l'événement statique du flux vidéo, la durée de l'événement statique étant représentée en utilisant une certaine quantité de trames statiques, et l'événement statique étant utilisé pour représenter une pause du flux vidéo ;
la corrélation du paramètre caractéristique statique de l'événement statique à la durée de l'événement statique du flux vidéo comprenant :

la représentation du paramètre caractéristique statique de l'événement statique à l'aide d'une relation proportionnelle entre la quantité de trames statiques et une quantité totale de trames vidéo du flux vidéo, ou la représentation du paramètre caractéristique statique de l'événement statique à l'aide d'une relation proportionnelle entre la quantité de trames statiques et une quantité de lecture continue du flux vidéo ; et
une deuxième unité d'acquisition, configurée pour acquérir une valeur de distorsion de l'événement statique du flux vidéo en fonction de la fréquence de trame et du paramètre caractéristique statique de l'événement statique qui appartiennent au flux vidéo, la valeur de distorsion de l'événement statique étant utilisée pour représenter un degré de distorsion du flux vidéo ;

dans lequel la deuxième unité d'acquisition est spécifiquement configurée pour :

acquérir la valeur de distorsion de l'événement statique du flux vidéo selon une formule

$$valeur\_artéfact\_statique = \frac{a_1}{a_2 + \dfrac{a_3}{fps \cdot f\_longueur\_statique^{a_4}}}, \quad \text{dans laquelle :}$$

*fps* est la fréquence de trame du flux vidéo ; *f_longueur statique* est le paramètre caractéristique statique de l'événement statique du flux vidéo ;
*valeur_artéfact_statique* est la valeur de distorsion de l'événement statique ; et $a_1$, $a_2$, $a_3$ et $a_4$ sont des constantes positives.

**9.** Appareil selon la revendication 8, dans lequel quand le paramètre caractéristique statique de l'événement statique est représenté à l'aide de la relation proportionnelle entre la quantité de trames statiques et la quantité totale de trames vidéo du flux vidéo, la première unité d'acquisition est spécifiquement configurée pour : acquérir la fréquence de trame du flux vidéo ; et
déterminer le paramètre caractéristique statique *f_longueur_statique* de l'événement statique du flux vidéo selon une formule

$$f\_longueur\_statique = \frac{i\_nombre\_total\_trames\_statiques}{i\_nombre\_total\_trames},$$

dans laquelle :

i_nombre_total_trames indique la quantité totale de trames vidéo du flux vidéo ;
i_nombre_total_trames_statiques indique une quantité de toutes les trames statiques correspondant à l'événement statique du flux vidéo ; et f_longueur_statique indique le paramètre caractéristique statique de l'événement statique.

<u>100</u>

```
┌─────────────────────────────────────────────────┐
│ Acquire a frame rate and a freeze feature         │   S110
│ parameter of a freeze event that are of a video   │
│ stream, where the freeze feature parameter of the │
│ freeze event is correlated with duration of the   │
│ freeze event of the video stream, and the freeze  │
│ event is used to represent a pause of the video   │
│ stream                                            │
└─────────────────────────────────────────────────┘
```

```
┌─────────────────────────────────────────────────┐
│ Acquire a freeze event distortion value of the    │   S120
│ video stream according to the frame rate and the  │
│ freeze feature parameter of the freeze event that │
│ are of the video stream, where the freeze event   │
│ distortion value may be used to assess video      │
│ distortion quality                                │
└─────────────────────────────────────────────────┘
```

FIG. 1

200

```
┌─────────────────────────────────────┐
│ Apparatus for assessing a video       │
│ freeze distortion value               │
│   ┌──────────────────────┐  210       │
│   │ First acquiring       │           │
│   │ module                │           │
│   └──────────────────────┘           │
│   ┌──────────────────────┐  220       │
│   │ Second acquiring      │           │
│   │ module                │           │
│   └──────────────────────┘           │
└─────────────────────────────────────┘
```

FIG. 2

300

Processor
310

Bus 330

Memory
320

FIG. 3

Transmit end

Video stream

Receive end

Video signal

Pause prediction
device

Information
about a freeze
event

Auxiliary information,
for example, a frame rate
and a video error
concealment method

Assessment
apparatus

Assessment result

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070237227 A1

- EP 2400758 A1